(19) Europäisches Patentamt / European Patent Office / Office européen des brevets

(11) **EP 4 591 108 B1**

(12) **FASCICULE DE BREVET EUROPÉEN**

(45) Date de publication et mention
de la délivrance du brevet:
**01.04.2026 Bulletin 2026/14**

(21) Numéro de dépôt: **23769290.0**

(22) Date de dépôt: **18.09.2023**

(51) Classification Internationale des Brevets (IPC):
**G02B 21/14** *(2006.01)* **G02B 21/36** *(2006.01)*

(52) Classification Coopérative des Brevets (CPC):
**G02B 21/14; G02B 21/361**

(86) Numéro de dépôt international:
**PCT/EP2023/075685**

(87) Numéro de publication internationale:
**WO 2024/061843 (28.03.2024 Gazette 2024/13)**

(54) **MICROSCOPE OPTIQUE AVEC RÉSONATEUR**

OPTISCHES MIKROSKOP MIT RESONATOR

OPTICAL MICROSCOPE WITH RESONATOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **19.09.2022 FR 2209431**

(43) Date de publication de la demande:
**30.07.2025 Bulletin 2025/31**

(73) Titulaire: **Institut d'Optique Graduate School
91127 Palaiseau (FR)**

(72) Inventeur: **GREFFET, Jean-Jacques
91370 Verrieres le Buisson (FR)**

(74) Mandataire: **Loyer & Abello
9, rue Anatole de la Forge
75017 Paris (FR)**

(56) Documents cités:
**US-A1- 2011 311 962    US-A1- 2022 011 560
US-B2- 10 133 048**

## Description

### Domaine technique

L'invention se rapporte au domaine de la microscopie optique.

En particulier, l'invention se rapporte au domaine de la détection et de la caractérisation de nanoparticules par microscopie optique. L'invention peut être utilisée pour la détection d'objets de dimension caractéristique allant de 1 à 100 nm. De tels objets incluent des nanoparticules métalliques, des polluants nanométriques et d'autres objets d'intérêt biologique, tels des protéines ou des peptides.

### Arrière-plan technologique

Un moyen de détecter des nanoparticules consiste à mettre un œuvre un marquage desdites particules, par exemple un marquage fluorescent. Cependant, une telle méthode atteint rapidement ses limites car l'effet du marquage fluorescent est limité dans le temps, restreignant ainsi la durée des observations. La qualité de la détection est également affectée. En effet, la résolution temporelle des images est limitée. De plus, les fluorophores se dégradent rapidement dans le temps. Enfin, cette technique est difficile à mettre en œuvre, car le marquage fluorescent requiert d'importants préparatifs en amont.

Différentes techniques de microscopie optique permettent de détecter des nanoparticules par diffusion élastique sans avoir recours à un marquage préalable, notamment des techniques de champ sombre ou des techniques interférométriques. Parmi ces dernières, les plus courantes sont les techniques iSCAT (interferential scattering), COBRi (coherent bright field), IRIS (interferometric reflectance imaging sensor). Elles permettent de voir couramment des particules de 10 nm, voire moins.

Une problématique centrale des techniques interférométriques et des techniques de champ sombre est celle du rapport signal sur bruit. En effet, leur objectif est de détecter un signal d'intérêt, qui est une lumière diffusée de façon élastique par une nanoparticule. Cependant, différents types de bruits affectent la détection du signal d'intérêt.

En effet, il existe de nombreux bruits techniques liés aux fluctuations du système de mesure. Par ailleurs, une source lumineuse incidente utilisée dans un microscope est soumise à des fluctuations d'intensité appelées bruit de photon qui sont intrinsèques au processus physique. En outre, la diffusion du faisceau d'éclairement est à l'origine d'une figure d'interférence aléatoire appelée bruit de speckle.

La demande de brevet WO 2018/011591 divulgue un microscope interférométrique de type iSCAT dans lequel un filtre spatial permet d'atténuer le faisceau d'illumination pour obtenir une augmentation du contraste de l'image. Un autre exemple de microscope est divulgué dans le document US2011/311962.

### Résumé

Un objectif à la base de l'invention est de fournir un microscope optique permettant d'améliorer un rapport signal sur bruit pour une détection individuelle de nanoparticules sans marquage.

Selon un mode de réalisation, l'invention fournit un microscope optique comprenant

- une source lumineuse émettant une lumière d'éclairement adaptée à éclairer un échantillon à imager,
- un dispositif optique comportant un objectif de microscope,
- un résonateur comportant, successivement dans une direction d'un axe optique de l'objectif de microscope, au moins une première couche présentant un premier indice optique, au moins une couche d'espacement présentant un deuxième indice optique et au moins une couche de guide d'onde présentant un troisième indice optique, le deuxième indice optique étant inférieur au premier indice optique et au troisième indice optique, le résonateur présentant une surface de support opposée au dispositif optique et destinée à recevoir l'échantillon,
- un détecteur optique,

le dispositif optique étant agencé pour collecter une lumière sortante en sortie du résonateur et diriger la lumière sortante depuis ledit résonateur vers le détecteur optique pour former une image de l'échantillon sur le détecteur optique,
la lumière sortante comportant une lumière diffusée par l'échantillon et une portion non diffusée de la lumière d'éclairement.

Grâce à ces caractéristiques, plusieurs avantages techniques sont obtenus :

- exalter la section efficace de diffusion des particules, ce qui revient à exalter le signal d'intérêt recueilli par le détecteur optique,

- concentrer la lumière diffusée par l'échantillon dans un très faible angle solide, ce qui autorise un filtrage spatial sélectif efficace de la lumière diffusée.

Ces effets permettent d'améliorer le rapport signal sur bruit. L'exaltation de la section efficace de diffusion augmente le signal d'intérêt recueilli par le détecteur optique. La concentration de la lumière diffusée dans un angle solide fortement limité permet l'utilisation, sans perte de signal d'intérêt, d'un filtre d'atténuation de la lumière parasite qui bruite la mesure du signal d'intérêt.

En particulier, selon un mode de réalisation, l'invention fournit un microscope optique comprenant :

- une source lumineuse émettant une lumière d'éclairement,
- un détecteur optique,
- un dispositif optique comportant un objectif de microscope, le dispositif optique recevant la lumière d'éclairement pour diriger la lumière d'éclairement sur un échantillon ,
- un résonateur placé entre le dispositif optique et l'échantillon, le résonateur comportant, successivement dans une direction d'un axe optique de l'objectif de microscope, au moins une première couche présentant un premier indice optique, au moins une couche d'espacement présentant un deuxième indice optique et au moins une couche de guide d'onde présentant un troisième indice optique, le deuxième indice optique étant inférieur au premier indice optique et au troisième indice optique, le résonateur présentant une surface de support opposée au dispositif optique et destinée à recevoir l'échantillon,

l'objectif de microscope étant configuré pour diriger la lumière d'éclairement sur le résonateur avec un angle d'incidence supérieur à un angle critique d'une interface entre la première couche et la couche d'espacement, de manière que la lumière d'éclairement excite de façon résonante au moins un mode dans la couche de guide d'onde et éclaire l'échantillon par une onde évanescente exaltée,
le dispositif optique étant agencé pour collecter une lumière sortante du résonateur et diriger la lumière sortante depuis ledit résonateur vers le détecteur optique pour former une image de l'échantillon sur le détecteur optique, la lumière sortante comportant une lumière diffusée par l'échantillon et une portion réfléchie de la lumière d'éclairement.

Grâce à ces caractéristiques, plusieurs avantages techniques sont obtenus :

i) Exalter l'intensité d'éclairement de l'échantillon grâce à l'excitation résonante du guide d'onde et ainsi exalter la quantité de lumière diffusée par les particules contenues dans l'échantillon. En effet, l'excitation résonante d'un ou plusieurs modes crée une accumulation d'énergie dans le résonateur, ce qui conduit à une exaltation du champ dans le résonateur ainsi que dans son voisinage.
ii) Exalter la section efficace de diffusion des particules.
iii) Créer une intensité d'éclairement par onde évanescente qui est confinée au voisinage de l'interface entre le résonateur et l'échantillon et uniforme dans un plan parallèle à cette interface.
iv) Concentrer la lumière diffusée par l'échantillon dans un très faible angle solide.

Ces effets permettent d'améliorer le rapport signal sur bruit.
De manière générale, la lumière diffusée par l'échantillon correspond à la lumière émise en sortie de l'échantillon et de la lamelle résonante ayant interagi avec les particules contenues dans l'échantillon et une portion non diffusée de la lumière d'éclairement correspond à la partie de la lumière d'éclairement présente dans le faisceau lumineux sortant sans interaction avec les particules.
Le voisinage de la lamelle résonante correspond à l'épaisseur de l'échantillon située à moins de quelques centaines de nanomètres de la surface de support de la lamelle résonante, par exemple à une distance inférieure à 200 nm de cette surface de support.
Selon des modes de réalisation, un microscope optique tel que décrit précédemment peut comporter une ou plusieurs des caractéristiques suivantes.
Selon un mode de réalisation, le dispositif optique comporte un filtre d'amplitude disposé entre l'objectif de microscope et le détecteur optique, par exemple dans le plan de Fourier de l'objectif de microscope ou dans un plan image de ce plan, et configuré pour appliquer une première atténuation sélective à la portion non diffusée de la lumière d'éclairement.
Ainsi, la lumière diffusée représente une proportion plus importante de l'intensité de la lumière sortante détectée par le détecteur optique. En d'autres termes, un tel filtrage augmente le rapport entre l'amplitude du champ diffusé et l'amplitude du champ non diffusé par l'échantillon.

Différentes techniques sont disponibles pour réaliser un tel filtre d'amplitude, par exemple un dépôt de couche mince, notamment un dépôt de couche mince métallique. L'atténuation appliquée par le filtre d'amplitude peut être caractérisée par un coefficient de transmission d'intensité. Selon un mode de réalisation, le coefficient de transmission d'intensité associé à la première atténuation est compris entre $10^{-1}$ à $10^{-6}$, préférentiellement entre $10^{-2}$ et $3.10^{-4}$. Par exemple un coefficient de transmission d'intensité proche de $10^{-3}$ est approprié pour utiliser en tant que détecteur une caméra avec une capacité de puits de 10k électrons, ce qui est courant.

Selon un mode de réalisation, le coefficient de transmission d'intensité associé à la première atténuation est inférieur à $10^{-6}$. En s'assurant ainsi que la transmission du champ réfléchi est sensiblement nulle, on obtient une configuration de champ sombre.

Selon un mode de réalisation, la lumière diffusée par l'échantillon est constituée d'une première portion de lumière diffusée provenant du ou des modes excités de façon résonante et d'une deuxième portion de lumière diffusée, le filtre d'amplitude étant en outre configuré pour appliquer une deuxième atténuation sélective à la deuxième portion de lumière diffusée. Un tel filtre d'amplitude permet de sélectionner la lumière diffusée autour d'un angle particulier correspondant aux fuites radiatives du ou des modes guidés par atténuation du reste de la lumière diffusée. Ainsi, le champ diffusé via les modes guidés n'est pas atténué et est transmis au détecteur optique. Un tel filtre d'amplitude peut être utilisé dans une configuration de champ sombre ou dans une configuration interférométrique à champ clair.

Selon un mode de réalisation, le coefficient de transmission d'intensité associé à la deuxième atténuation est compris entre $10^{-1}$ à $10^{-6}$.

Selon un mode de réalisation, le coefficient de transmission d'intensité associé à la deuxième atténuation est inférieur à $10^{-6}$.

Selon un mode de réalisation en configuration de champ sombre, le coefficient de transmission d'intensité associé à la première atténuation et le coefficient de transmission d'intensité associé à la deuxième atténuation sont inférieurs à $10^{-6}$. Ainsi, le filtre d'amplitude est configuré pour appliquer une atténuation totale au champ réfléchi et au champ diffusé par l'échantillon excepté autour d'un angle particulier correspondant aux fuites radiatives du ou des modes guidés.

Selon un mode de réalisation en configuration interférentielle, le filtre d'amplitude est configuré pour appliquer une première atténuation sélective à la portion non diffusée de la lumière d'éclairement et une deuxième atténuation sélective à la deuxième portion de lumière diffusée. De préférence dans ce cas, le coefficient de transmission d'intensité associé à la première atténuation est supérieur au coefficient de transmission d'intensité associé à la deuxième atténuation. Par exemple, le coefficient de transmission d'intensité associé à la première atténuation est compris entre $10^{-1}$ et $10^{-6}$ et le coefficient de transmission d'intensité associé à la deuxième atténuation est compris entre $10^{-1}$ et $10^{-6}$.

Selon un mode de réalisation, le dispositif optique comporte deux lentilles convergentes agencées pour imager un plan de Fourier de l'objectif de microscope sur ledit filtre d'amplitude.

Ainsi, le filtre d'amplitude peut atténuer la portion non diffusée de la lumière d'éclairement, une position de ladite portion non diffusée de la lumière d'éclairement étant connue dans le plan de Fourier. Cette atténuation peut être précisément sélective.

Selon un mode de réalisation, la lumière d'éclairement est un faisceau lumineux, notamment un faisceau laser.

Ainsi, la lumière d'éclairement est cohérente et peut être monochromatique.

Selon un mode de réalisation, la lumière d'éclairement est émise par une diode élec-troluminescente (LED).

Selon un mode de réalisation, la lumière d'éclairement est monochromatique et présente une longueur d'onde comprise entre 400 nanomètres et 1300 nanomètres, de préférence entre 450 et 532 nanomètres.

Selon un mode de réalisation, le résonateur comprend en outre au moins un miroir partiellement réfléchissant.

Selon un mode de réalisation, le miroir est un miroir de Bragg. Il s'agit en particulier d'un miroir partiellement réfléchissant.

Selon un mode de réalisation, le résonateur comprend une pluralité d'espaceurs et une pluralité de guides d'onde, chaque espaceur de la pluralité d'espaceurs étant placé en contact avec au moins un de la pluralité de guides d'onde.

Selon un mode de réalisation, au moins deux premiers espaceurs parmi la pluralité d'espaceurs ont des épaisseurs différentes. Des épaisseurs appropriées peuvent être typiquement comprises entre 100 nm et 1 $\mu$m.

Selon un mode de réalisation, au moins deux seconds espaceurs parmi la pluralité d'espaceurs sont composés de matériaux différents.

Selon un mode de réalisation, au moins un espaceur parmi la pluralité d'espaceurs est composé de fluorure de magnésium.

Selon un mode de réalisation, au moins deux premiers guides d'onde parmi la pluralité de guides d'onde ont des épaisseurs différentes. Des épaisseurs appropriées peuvent être typiquement comprises entre 10 et 500 nm.

Selon un mode de réalisation, au moins deux seconds guides d'onde parmi la pluralité de guides d'onde sont composés de matériaux différents.

Selon un mode de réalisation, au moins un guide d'onde parmi la pluralité de guides d'onde est en dioxyde de titane.

Selon un mode de réalisation, un mode résonant du résonateur est une onde de surface.

Selon un mode de réalisation, le dispositif optique comprend au moins une lentille convergente traversée par la lumière sortante, la lentille convergente étant configurée pour imager un plan objet de l'objectif de microscope sur ledit détecteur optique.

Selon un mode de réalisation, le microscope comporte ou est relié à un système de traitement d'images, le système de traitement d'images étant configuré pour :

- enregistrer une pluralité d'images détectées par le détecteur optique à des instants successifs,
- combiner la pluralité d'images en une image de référence, par exemple chaque pixel de l'image de référence pouvant être calculé en tant que valeur moyenne ou valeur médiane de pixels correspondants de la pluralité d'images
- traiter au moins une image détectée par le détecteur optique avec l'image de référence de manière à supprimer des signaux statiques.

Pour cela, il est possible de soustraire l'image de référence de la ou de chaque image détectée. Cela produit une ou des images où il ne reste que des signaux dynamiques dans le temps, et non les signaux statiques. Ainsi, l'ensemble des bruits statiques peuvent être filtrés.

Selon un mode de réalisation, le système de traitement d'images est configuré pour appliquer un filtre de convolution à au moins une image détectée par le détecteur optique.

Selon un mode de réalisation, le filtre de convolution est un filtre gaussien. Selon un mode de réalisation, le microscope optique comporte ou est relié à un système de traitement d'images, le système de traitement d'images étant configuré pour :

déterminer un contraste dans une image détectée par le détecteur optique,
déterminer au moins un paramètre d'une particule contenue dans l'échantillon en fonction dudit contraste, ledit paramètre étant choisi dans le groupe constitué d'une masse de la particule et une position de la particule dans la direction de l'axe optique.

Selon un mode de réalisation, le détecteur optique peut être une caméra numérique.

Selon un mode de réalisation, la source lumineuse et le dispositif optique sont agencés pour éclairer l'échantillon reçu par la surface de support du résonateur en réflexion.

Selon un mode de réalisation, le dispositif optique reçoit la lumière d'éclairement pour diriger la lumière d'éclairement sur l'échantillon, l'objectif de microscope du dispositif optique étant configuré pour diriger la lumière d'éclairement sur le résonateur avec un angle d'incidence supérieur à un angle critique d'une interface entre la première couche et la couche d'espacement, de manière que la lumière d'éclairement excite de façon résonante au moins un mode dans la couche de guide d'onde et éclaire l'échantillon par une onde évanescente exaltée.

Selon un mode de réalisation, la portion non diffusée par l'échantillon de la lumière sortante est une portion réfléchie de la lumière d'éclairement.

Selon un mode de réalisation, le dispositif optique comporte une lame séparatrice polarisante ou non polarisante, la lame séparatrice polarisante ou non polarisante réfléchissant la lumière d'éclairement en direction de l'objectif de microscope et étant traversée par la lumière sortante.

Selon un mode de réalisation, le détecteur optique est un premier détecteur optique, le microscope optique comprenant un second détecteur optique, le dispositif optique comprenant une lame séparatrice non polarisante, la lame séparatrice non polarisante recevant la lumière sortante et séparant la lumière sortante en une première portion de lumière sortante dirigée vers le premier détecteur et une seconde portion de lumière sortante dirigée vers le second détecteur, la première portion de lumière sortante comportant une première portion de lumière réfléchie et une première portion de lumière diffusée, un masque de phase étant agencé pour être traversé par la première portion de lumière sortante, le masque de phase étant configuré pour appliquer un déphasage entre la première portion de lumière réfléchie et la première portion de lumière diffusée.

Ainsi, une différence d'intensité lumineuse peut être mesurée entre le premier détecteur optique et le second détecteur optique.

Selon un mode de réalisation, le masque de phase est un premier masque de phase, le dispositif optique comportant de plus un second masque de phase agencé pour être traversé par la seconde portion de lumière sortante, la seconde portion de lumière sortante comportant une seconde portion de lumière réfléchie et une seconde portion de lumière diffusée, le second masque de phase étant configuré pour appliquer un déphasage entre la seconde portion de lumière réfléchie et la seconde portion de lumière diffusée, le premier masque de phase et le second masque de phase présentant des propriétés de phase différentes.

Ainsi, un déphasage entre le premier masque de phase et le second masque de phase peut être configuré pour minimiser le bruit de fond et maximiser le contraste par soustraction des deux images.

Selon un mode de réalisation, le dispositif optique comporte un condenseur optique recevant la lumière d'éclairement en sortie de la source lumineuse, le condenseur optique étant configuré pour focaliser la lumière d'éclairement dans un plan de Fourier de l'objectif de microscope sur une zone distante de l'axe optique de l'objectif de microscope pour produire ledit angle d'incidence.

Ainsi, ledit angle d'incidence peut être choisi pour dépasser l'angle critique sur une interface du résonateur.

Selon un mode de réalisation, le résonateur est disposé entre l'objectif de microscope et la source lumineuse le long de l'axe optique dudit objectif de microscope de sorte que la source lumineuse soit adaptée à éclairer l'échantillon reçu par la surface de support du résonateur en transmission.

Selon un mode de réalisation, la source lumineuse est agencée pour émettre un faisceau lumineux incident éclairant la surface de support du résonateur en incidence normale.

## Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

La [Fig.1] représente un exemple de microscope optique en transmission.

La [Fig.2] représente un microscope optique en réflexion selon un premier mode de réalisation comprenant une lamelle résonante.

La [Fig.3] représente le microscope optique en réflexion selon un deuxième mode de réalisation comprenant la lamelle résonante.

La [Fig.4] représente un objectif de microscope et la lamelle résonante du microscope optique de la [Fig.2].

La [Fig.5] est une vue analogue à la [Fig.4] illustrant la diffusion de la lumière par une nanoparticule et dans la lamelle résonante du microscope optique de la [Fig.2].

La [Fig.6] est une représentation schématique du couplage d'une onde lumineuse dans la lamelle résonante du microscope optique de la [Fig.2].

La [Fig.7] est une représentation graphique d'une distribution angulaire d'énergie diffusée par une nanoparticule.

La [Fig.8] est une représentation graphique de la relation de dispersion de la lamelle résonante utilisée à la [Fig.7].

La [Fig.9] est une représentation d'un filtre spatial pouvant être utilisé dans le microscope optique selon une première variante travaillant en champ sombre. La partie noire est opaque. Le filtre spatial laisse passer la majorité de la lumière diffusée qui est concentrée autour d'un angle défini par la lamelle résonante et coupe le faisceau réfléchi.

La [Fig.10] est une représentation du filtre spatial pouvant être utilisé dans le microscope optique avec lamelle résonante selon une deuxième variante permettant d'atténuer le champ réfléchi pour travailler en mode interférométrique.

La [Fig.11] est une représentation du filtre spatial pouvant être utilisé dans le microscope optique avec lamelle résonante selon une troisième variante permettant d'atténuer fortement le faisceau réfléchi et de séparer le signal utile du bruit.

La [Fig.12] est une représentation de la lamelle résonante selon une première alternative utilisant un ensemble de couches diélectriques.

La [Fig.13] est une représentation de la lamelle résonante selon une deuxième alternative utilisant un miroir.

La [Fig.14] est une représentation du microscope optique en réflexion selon un troisième mode de réalisation.

La [Fig.15] est une représentation graphique de résultats pouvant être obtenus dans une configuration de l'art antérieur.

La [Fig.16] est une représentation graphique de résultats pouvant être obtenus dans une configuration champ sombre du microscope optique utilisant le filtre de la [Fig.9].

La [Fig.17] est une représentation graphique de résultats pouvant être obtenus dans une configuration interférentielle du microscope optique utilisant le filtre de la [Fig.10]

La [Fig.18] est un ensemble de représentations graphiques de résultats pouvant être obtenus avec différentes valeurs de distance entre la nanoparticule et la lamelle résonante.

La [Fig.19] représente un microscope optique en transmission comprenant une lamelle résonante selon un quatrième mode de réalisation.

## Description des modes de réalisation

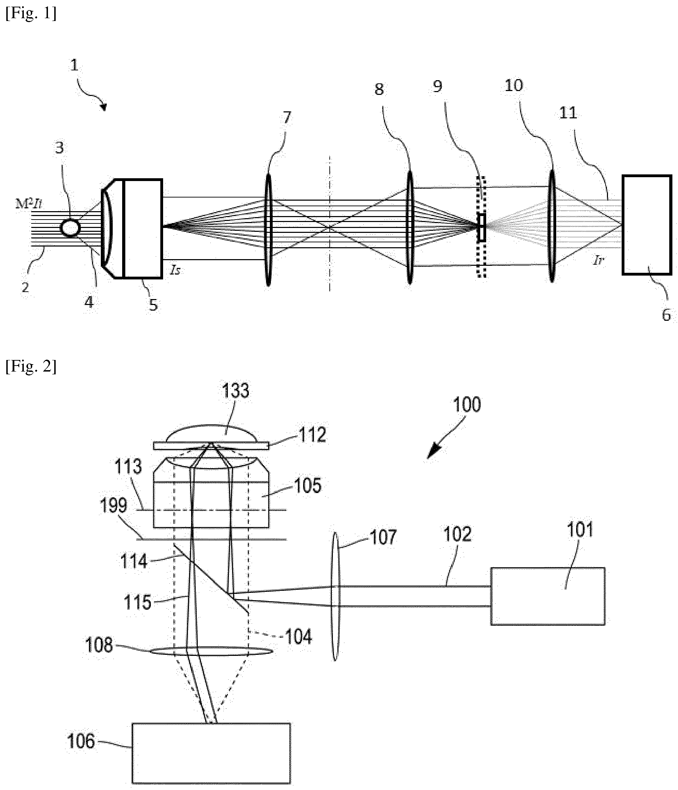

On va décrire ci-dessous des modes de réalisation d'un microscope optique muni d'un résonateur permettant une détection très performante de la lumière diffusée par des objets de très petite taille. Pour cela on introduit préalablement, en référence à la [Fig.1], des notions de microscopie optique utiles à la compréhension de l'invention.

La figure 1 représente un exemple de microscope en transmission 1. Le microscope en transmission 1 comprend une source lumineuse (non représentée) émettant un faisceau lumineux incident 2 ayant une intensité incidente $I'_i = M^2 I_i$. Par convention, l'intensité incidente $I_i$ est définie dans le plan image de la caméra 9 et diffère d'un facteur $M^2$ de l'intensité $I'_i$ du faisceau lumineux incident 2 définie dans le plan de la particule, où $M$ désigne le grandissement du microscope. Une nanoparticule 3 est éclairée par le faisceau lumineux incident 2. Un éclairement du faisceau lumineux incident 2 sur la nanoparticule 3 est à l'origine d'une lumière diffusée 4 ayant une intensité de diffusion $I_s$ dans le plan image de la caméra.

Le microscope en transmission 1 comprend un objectif de microscope 5, un dispositif optique et une caméra 6. Le dispositif optique comprend deux lentilles convergentes 7 et 8 formant un montage 4-f, un filtre spatial 9 et une lentille de tube 10. Le montage 4-f permet de projeter le plan de Fourier de l'objectif de microscope 5 sur le filtre spatial 9.

L'objectif 5, le dispositif optique et la caméra 6 disposent d'un axe optique commun. Le faisceau lumineux incident 2 est parallèle à l'axe optique commun. Le faisceau lumineux incident 2 et la lumière diffusée 4 traversent l'objectif 5 et le dispositif optique avant d'être imagés sur la caméra 6.

La caméra 6 reçoit un signal final qui est une superposition du faisceau lumineux incident 2 et de la lumière diffusée 4. Le signal final peut comporter un terme d'interférence en raison d'un déphasage $\Delta\theta$ entre le faisceau lumineux incident et la lumière diffusée.

Une intensité détectée du signal final s'exprime :

$$I_{det} = I_i + I_s + 2\sqrt{I_i I_s}\,\cos(\Delta\theta) = I_i\left(1 + \left(\frac{I_s}{I_i}\right) + 2\sqrt{\frac{I_s}{I_i}}\,\cos(\Delta\theta)\right)$$

La nanoparticule 3 a une section efficace de diffusion $\sigma$, qui est proportionnelle au carré de son volume. De plus, la caméra 6 reçoit une fraction d'énergie diffusée collectée $f_{col}$. Le microscope en transmission 1 dispose d'un grandissement $M$. Ainsi, une puissance diffusée vers un pixel de la caméra s'écrit :

$$P_s = f_{col}\sigma I'_i = f_{col}\sigma M^2 I_i$$

Par ailleurs, la puissance diffusée se répartit au niveau d'une surface S d'une tâche d'Airy correspondant à une image de la nanoparticule 3 sur la caméra 6. La puissance diffusée peut donc également s'exprimer :

$$P_s = S I_s$$

Cela permet de reformuler l'expression de l'intensité détectée en fonction de la section efficace de diffusion $\sigma$, de la fraction d'énergie diffusée collectée $f_{col}$ et du grandissement $M$ :

$$I_{det} = I_i\left(1 + \frac{M^2 f_{col}\sigma}{S} + 2M\sqrt{\frac{f_{col}\sigma}{S}}\cos(\Delta\theta)\right)$$

Selon un exemple quantitatif, les grandeurs physiques ont les valeurs suivantes :

- une longueur d'onde du faisceau lumineux incident 2 est 450 nanomètres et la nanoparticule 3 a un diamètre de 3 nanomètres. Un indice optique de la nanoparticule 3 est 1.5 et la nanoparticule 3 est en suspension dans de l'eau, un indice optique de l'eau étant 1.33. La section efficace de diffusion est donc de 7.8 $10^{-14}\mu m^2$.
- le grandissement M est de 100.
- Un rayon de la tâche d'Airy peut être de 400 nm dans le plan image de l'objectif 5, soit 40 $\mu$m dans le plan image de la caméra 9. La surface de la tâche d'Airy est alors de 5000 $\mu m^2$ dans le plan image de la caméra 9. L'objectif de microscope 5 peut être un microscope à huile et avoir une ouverture numérique de 1.45. Le facteur de collection peut alors être de 42%. Dans ce cas-là, la valeur numérique suivante est obtenue :

$$\frac{f_{col}\sigma}{S} = 6.5\ 10^{-18}$$

Le microscope en transmission 1 peut être utilisé en configuration interférentielle (ou de champ clair) ou en configuration de champ sombre. Lorsque le facteur de transmission de l'atténuateur placé au centre (filtre spatial 9) est nul, le microscope est en configuration de champ sombre. Schématiquement, lorsque ce facteur de transmission est non nul, le microscope est en configuration interférentielle. En fait, une configuration de champ sombre est obtenue dès lors que le terme interférométrique est négligeable devant le terme de diffusion directe de la nanoparticule.

En configuration interférentielle, la caméra 6 reçoit à la fois le faisceau lumineux incident 2 et la lumière diffusée 4 qui interfèrent.

Comme représenté sur la [Fig.1], le faisceau lumineux incident 2 peut être atténué plus ou moins fortement par le filtre spatial 9. En configuration de champ sombre, le facteur de transmission du filtre spatial 9 est nul.

La lentille de tube 7 est configurée pour focaliser la lumière diffusée 4 dans un plan focal objet de la lentille convergente intermédiaire 8.

Le filtre spatial 9 comprend un cache placé sur l'axe optique commun. La lentille de tube 7 et la lentille convergente intermédiaire 8 focalisent le faisceau lumineux incident 2 sur le cache du filtre spatial, le filtre spatial 9 étant positionné à une distance focale de la lentille convergente intermédiaire 8.

Le filtre spatial 9 laisse passer un faisceau filtré 11. La caméra reçoit donc la lumière diffusée 4 et le faisceau filtré 11, la lumière diffusée 4 traversant la dernière lentille convergente 10 et étant focalisée sur la caméra 6, dans un plan focal image de la dernière lentille convergente 10.

En configuration champ sombre, l'intensité incidente parvenant à la caméra est nulle et l'intensité détectée s'exprime :

$$I_{det} = I_i\left(\frac{f_{col}\sigma M^2}{S}\right)$$

Pour une valeur de grandissement $M$ de 100, l'intensité détectée est de $6.5\ 10^{-14}\ I_i$.

Un nombre moyen $N$ de photons détectés par un pixel d'aire $S'$ pendant une durée $\tau$ est $I_{det}S'\tau$. En considérant un bruit de photon (en anglais *shot noise*) comme une source principale de bruit et en exprimant l'intensité en nombre de photons par seconde et par unité de surface, un rapport signal sur bruit s'exprime alors :

$$SNR = \frac{I_{det}S'\tau}{\sqrt{I_{det}S'\tau}} = M\sqrt{I_iS'\tau\left(\frac{f_{col}\sigma}{S}\right)}$$

Pour une surface $S'$ de 100 $\mu m^2$ et une intensité incidente de $10^{10}$ $s^{-1}\mu m^{-2}$, le rapport signal sur bruit est alors donné par : $100\ [10^{12}\ 6\ 10^{-18}\ \tau]^{1/2}=0.2\ \sqrt{\tau}$

Le rapport signal sur bruit devient supérieur à 1 si une moyenne sur une dizaine de pixels est effectuée pour une durée d'acquisition d'une seconde. Cependant, il existe un bruit de fond qui est en pratique plus grand que le signal de particules de 3 nm. Il est difficile de détecter des particules de diamètre inférieur à 10 nanomètres. Une augmentation du rapport signal sur bruit est donc une problématique cruciale.

Pour un microscope interférométrique à champ clair, l'intensité détectée s'exprime :

$$I_{det} = I_i\left(1 + 2M\sqrt{\frac{f_{col}\sigma}{S}}\cos(\Delta\theta)\right)$$

Le rapport signal sur bruit peut alors s'exprimer :

$$SNR = \frac{2M\,I_iS'\tau\sqrt{\frac{f_{col}\sigma}{S}}\cos(\Delta\theta)}{\sqrt{I_iS'\tau}} \sim 2M\sqrt{I_iS'\tau\left(\frac{f_{col}\sigma}{S}\right)}$$

Le rapport signal sur bruit est alors deux fois plus élevé qu'en configuration de champ sombre. En revanche, le signal à mesurer est considérablement plus important en configuration interférométrique. On peut caractériser la différence en introduisant le contraste c défini par : $c = M \sqrt{\dfrac{f_{col} \, \sigma}{S}}$ . On peut alors écrire que le détecteur enregistre un signal :

$$I_{det} = I_i \left( 1 + 2 \, c \cos(\varDelta\theta) \, \right)$$

En configuration interférométrique, l'amplitude du signal est ainsi $2 \, c \, I_i$ tandis qu'elle est $c^2 \, I_i$ en configuration de champ sombre.

L'intensité détectée en configuration interférométrique est plus élevée ce qui permet de passer au-dessus du bruit de fond limitant la détection en configuration de champ sombre. De plus, ceci permet une collecte plus rapide des électrons sur un pixel de la caméra, et donc une acquisition plus rapide.

Cependant, les fluctuations spatiales de l'intensité incidente $I_i$ (fluctuations de speckle) sont beaucoup plus grandes que le signal et doivent être soustraites. Il est alors nécessaire d'avoir un détecteur pouvant percevoir de très faibles variations du signal afin de distinguer le bruit de fond d'un signal utile. La problématique de l'amélioration du signal sur bruit est donc également importante en configuration de champ clair.

On a représenté sur les figures 2, 3, 14 et 19 quatre modes de réalisation d'un microscope optique 100, 200, 700, 800 comprenant :

- une source lumineuse 101, 201, 701, 801 émettant une lumière d'éclairement adaptée à éclairer un échantillon 133, 233, 733, 833 à imager,
- un dispositif optique comportant un objectif de microscope 105, 205, 705, 805,
- un résonateur comportant, successivement dans une direction d'un axe optique de l'objectif de microscope, au moins une première couche 241, 541, 641 présentant un premier indice optique, au moins une couche d'espacement 242, 542, 642 présentant un deuxième indice optique et au moins une couche de guide d'onde 243, 543, 643 présentant un troisième indice optique, le deuxième indice optique étant inférieur au premier indice optique et au troisième indice optique, le résonateur présentant une surface de support opposée au dispositif optique et destinée à recevoir l'échantillon 133, 233, 733, 833,
- un détecteur optique 106, 206, 706, 716, 806,

le dispositif optique étant agencé pour collecter une lumière sortante du résonateur et diriger la lumière sortante depuis ledit résonateur vers le détecteur optique pour former une image de l'échantillon 133, 233, 733, 833 sur le détecteur optique 106, 206, 706, 716, 806,
la lumière sortante comportant une lumière diffusée 104, 204, 504, 604, 704, 804 par l'échantillon et une portion non diffusée 115, 215, 715, 815 de la lumière d'éclairement.

Le résonateur se présente en pratique sous la forme d'une lamelle résonante 112 ; 212, 512, 612, 712, 812.

Dans les premier, deuxième et troisième modes de réalisation du microscope optique 100, 200, 700, la source lumineuse 101, 201, 701 et le dispositif optique sont agencés pour éclairer l'échantillon 133, 233, 733 reçu par la surface de support du résonateur 112, 212, 712 en réflexion. L'échantillon reçoit à cet effet un faisceau lumineux incident émis par la source lumineuse, après son passage à travers la lamelle résonante 112, 212, 712, comme cela sera décrit plus en détails ultérieurement. La surface de support de la lamelle résonante est orientée dans cette configuration à l'opposé de la source lumineuse.

A cet effet, le microscope optique 100, 200, 700 comprend une lame séparatrice polarisante 114, 214, 714 disposée sur l'axe optique de l'objectif de microscope 105, 205, 705 et agencée pour réfléchir au moins une partie de la lumière d'éclairement émise par la source lumineuse 101, 201, 701 en direction de la lamelle résonante 112, 212, 712. En variante, la lame séparatrice peut également être non polarisante.

Dans cette configuration en réflexion, le faisceau lumineux incident pénètre dans la lamelle résonante par une face inférieure de la lamelle résonante, opposée à la surface de support adaptée à recevoir l'échantillon 133, 233, 733. Cette surface de support sera appelée dans la suite la surface supérieure de la lamelle résonante 112, 212, 712.

De manière générale, dans la configuration en réflexion des premier, deuxième et troisième modes de réalisation, le faisceau lumineux incident émis par la source lumineuse se propage selon un chemin optique qui traverse tout d'abord une lentille convergente d'entrée 107, 207, 761. Après passage à travers la lentille convergente d'entrée 107, 207, 761, le faisceau lumineux incident est réfléchi partiellement par la lame séparatrice polarisante 114, 214, 714 et acheminé à travers l'objectif de microscope 105, 205, 705 puis à travers la lame résonante 112, 212, 712, jusqu'à l'échantillon 133, 233, 733 reçu par la surface de support de la lame résonante.

Après interaction entre l'échantillon 133, 233, 733 et le faisceau lumineux incident, un faisceau lumineux sortant est émis en sortie de la lamelle résonante 112, 212, 712. Ce faisceau lumineux sortant traverse l'objectif de microscope 105, 205, 705 et est transmis par la lame séparatrice polarisante 114, 214, 714. Il se propage à travers une lentille convergente de sortie 108, 208, 762. Il comprend la lumière diffusée 104, 204, 504, 604, 704, par l'échantillon 133, 233, 733 et une portion non diffusée 115, 215, 715 de la lumière d'éclairement. La portion non diffusée 115, 215, 715 correspond, lorsque le microscope optique est utilisé avec un éclairement en réflexion, à une partie du faisceau lumineux incident qui est réfléchie à l'interface entre la lamette résonante 112, 212, 712 et l'échantillon, sans interaction avec l'échantillon 133, 233, 733. La portion non diffusée 115, 215, 715 est donc dans cette configuration une portion réfléchie du faisceau lumineux incident.

Le fait que le faisceau lumineux incident traverse la lamelle résonante 112, 212, 712 avant de pénétrer dans l'échantillon permet d'exalter l'intensité d'éclairement de l'échantillon grâce à l'excitation résonante du guide d'onde et ainsi exalter la quantité de lumière diffusée par les particules placées au voisinage de la lame résonante.

En outre, une intensité d'éclairement par onde évanescente est confinée au voisinage de l'interface entre le résonateur et l'échantillon et uniforme dans un plan parallèle à cette interface L'éclairage est ainsi confiné sur une faible épaisseur. On évite le bruit apporté par la lumière diffusée par les particules éloignées de l'interface en cas d'éclairage non confiné.

La lamelle résonante 112, 212, 712 exalte la section efficace de diffusion des particules à son voisinage.

En outre, la lamelle résonante 112, 212, 712 modifie le diagramme de rayonnement des particules à son voisinage et concentre leur lumière diffusée dans un très faible angle solide. La collecte sélective de la lumière diffusée par l'échantillon est ainsi facilitée et le rapport signal sur bruit peut être facilement augmenté par un filtrage spatial, comme décrit plus en détails ultérieurement.

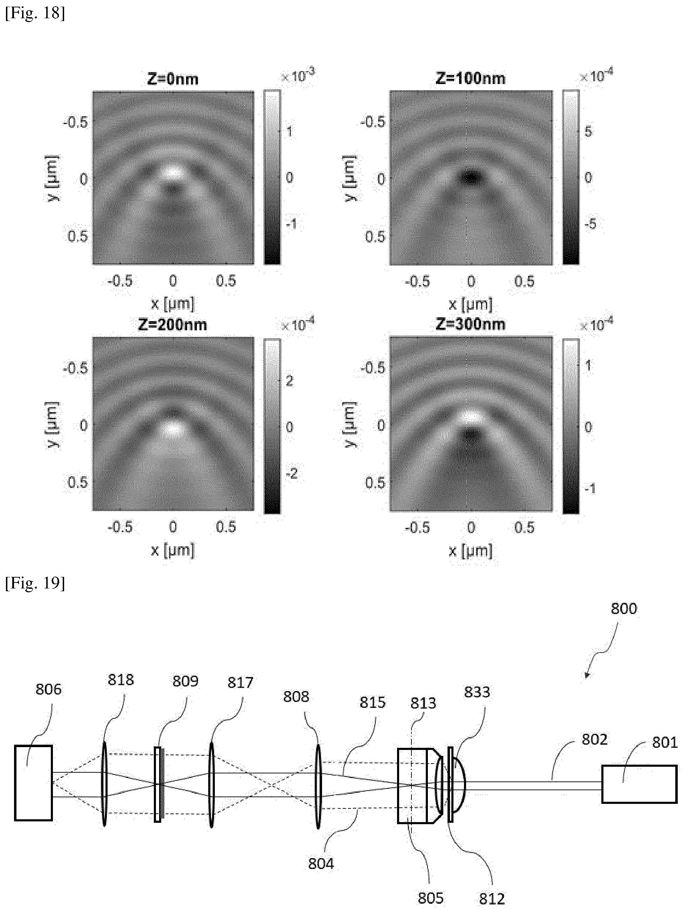

Dans le quatrième mode de réalisation du microscope optique 800 représenté sur la [Fig.19], la source lumineuse 801 et le dispositif optique sont agencés pour éclairer l'échantillon 833 reçu par la surface de support du résonateur 812 en transmission. L'échantillon reçoit ici directement un faisceau lumineux incident tel qu'émis par la source lumineuse 801, sans avoir interagi avec un autre élément optique. Le faisceau lumineux incident 802 se propage sous une incidence normale par rapport à la surface de support de la lamelle résonante. L'échantillon 833 est ainsi de préférence éclairé sous incidence normale. Aucun élément optique n'est ici disposé sur le chemin optique du faisceau lumineux incident entre la source lumineuse 801 et la lamelle résonante 812. La surface de support de la lamelle résonante 812 est orientée vers la source lumineuse 801.

Dans cette configuration en transmission, le faisceau lumineux incident pénètre dans l'échantillon placé sur la surface de support de la lamelle résonante 812 sans avoir traversé la lamelle résonante 812. Le faisceau lumineux incident 802 traverse toute l'épaisseur de l'échantillon 833 puis la lamelle résonante 812.

Le faisceau lumineux sortant est émis en sortie de la lamelle résonante 812. Il traverse l'objectif de microscope 805 et se propage à travers une lentille convergente de sortie 808, comme dans le microscope optique fonctionnant en réflexion.

Le faisceau lumineux sortant comprend la lumière diffusée 804 par l'échantillon 833 et une portion non diffusée 815 de la lumière d'éclairement. La portion non diffusée 815 correspond, lorsque le microscope optique est utilisé avec un éclairement en transmission, à une partie du faisceau lumineux incident qui est transmise à travers l'échantillon, sans interaction avec les particules contenues dans l'échantillon 833.

La lamelle résonante 812 exalte la section efficace de diffusion des particules situées à son voisinage

En outre, le couplage de la lumière diffusée par l'échantillon avec la lamelle résonante 812 concentre la lumière diffusée par l'échantillon dans un très faible angle solide. La collecte sélective de la lumière diffusée par l'échantillon est ainsi facilitée et le rapport signal sur bruit peut être augmenté par filtrage.

Nous allons décrire à présent plus en détails chacun des modes de réalisation représentés sur les figures annexées.

La [Fig.2] représente le premier mode de réalisation du microscope optique 100, fonctionnant en réflexion et comprenant une lamelle résonante 112 destinée à être mise en contact avec un échantillon 133 comportant une ou plusieurs nanoparticules en suspension dans une solution. La nanoparticule peut avoir un diamètre compris entre 1 nanomètre et 100 nanomètres.

En pratique, l'échantillon 133 peut reposer sous l'effet de son propre poids sur une surface supérieure de la lamelle résonante 112. La lamelle résonante 112 est disposée horizontalement. On appréciera qu'il peut exister d'autres configurations où le placement de l'échantillon au contact de la lamelle résonante 112 est assuré par d'autres moyens.

Le microscope optique 100 comprend de plus la source lumineuse 101, l'objectif de microscope 105 et le détecteur 106.

La source lumineuse 101 est ici une source laser, et le faisceau lumineux incident est un faisceau laser incident 102. La source lumineuse 101 est arrangée de manière à émettre ce faisceau laser incident 102, ayant par exemple une longueur d'onde comprise entre 400 nanomètres et 1300 nanomètres. Le faisceau laser incident 102 peut être un faisceau large éclairant une zone étendue de l'échantillon 133 ou un faisceau étroit focalisé, qui balaie la zone d'intérêt de l'échantillon 133.

Le microscope optique 100 comporte en outre le dispositif optique comprenant la lentille convergente d'entrée, qui sera appelée ici la première lentille convergente 107, la lentille convergente de sortie, appelée dans la suite la deuxième lentille convergente 108 et la lame séparatrice polarisante 114.

Le faisceau laser incident 102 traverse la première lentille convergente 107 et est réfléchi par la lame séparatrice polarisante 114. La première lentille convergente 107 peut être un condenseur optique. La lame séparatrice polarisante 114 comporte une surface semi-réfléchissante, positionnée de sorte qu'un angle incident du faisceau laser incident 102 sur la lame séparatrice polarisante 114 est de 45°. Selon un mode de réalisation, l'angle incident du faisceau laser incident 102 sur la lame séparatrice polarisante 114 peut avoir une valeur différente. La lame séparatrice polarisante 114 réfléchit une composante de polarisation du faisceau laser incident 102 mais laisse passer en transmission une autre composante de polarisation du faisceau laser incident 102.

Le faisceau laser incident 102 est réfléchi sur la lame séparatrice polarisante 114 puis est dirigé en direction de l'objectif de microscope 105. L'objectif de microscope 105 peut être un objectif à immersion, comprenant une huile à immersion ayant un indice de réfraction identique à un indice de réfraction du verre. L'objectif de microscope 105 présente une ouverture numérique adaptée à produire l'excitation d'un mode résonant comme décrit plus bas.

Le microscope optique 100 est de plus configuré de sorte que le faisceau laser incident 102 soit focalisé de façon excentrée par rapport à un milieu de l'axe optique de l'objectif de microscope 105. Ainsi, une distance à l'axe optique dans le plan de Fourier 113 permet de contrôler une inclinaison du faisceau laser incident 102 sur l'échantillon 133.

Ainsi, en sortie de l'objectif de microscope 105, le faisceau laser incident 102 éclaire une surface de l'échantillon 133 avec un angle d'incidence prédéfini et contrôlé par des paramètres du microscope optique 100.

Le faisceau laser incident 102 traverse une lame à retard 199 puis l'objectif 105 et illumine la lamelle résonante 112. La lame à retard 199 introduit une différence de phase entre deux composantes de polarisation du faisceau transmis par cette lame à retard. Un faisceau laser réfléchi 115 et un faisceau diffusé 104 sont émis depuis la lamelle résonante 112. Le faisceau laser réfléchi 115 et le faisceau diffusé 104 constituent le faisceau lumineux sortant. Le faisceau laser réfléchi 115 est une réflexion du faisceau laser incident 102 sur la zone d'intérêt. Le faisceau diffusé 104 se propage selon une plage d'angles plus large que celle du faisceau laser réfléchi 115.

Le faisceau diffusé 104 et le faisceau laser réfléchi 115 traversent l'objectif 105 puis la lame séparatrice polarisante 114. Le faisceau diffusé 104 et le faisceau laser réfléchi 115 traversent la deuxième lentille convergente 108 et sont imagés sur le détecteur 106.

La deuxième lentille convergente 108 peut être une lentille de tube. Une surface sensible du détecteur 106 peut être placée au niveau d'une distance focale de la deuxième lentille convergente 108.

Le détecteur 106 peut être un capteur photographique, par exemple de type CMOS ou CCD. Des capteurs limités à 10000 électrons par pixel peuvent notamment être utilisés. Le détecteur 106 peut de plus comporter une mémoire afin d'enregistrer plusieurs images successives.

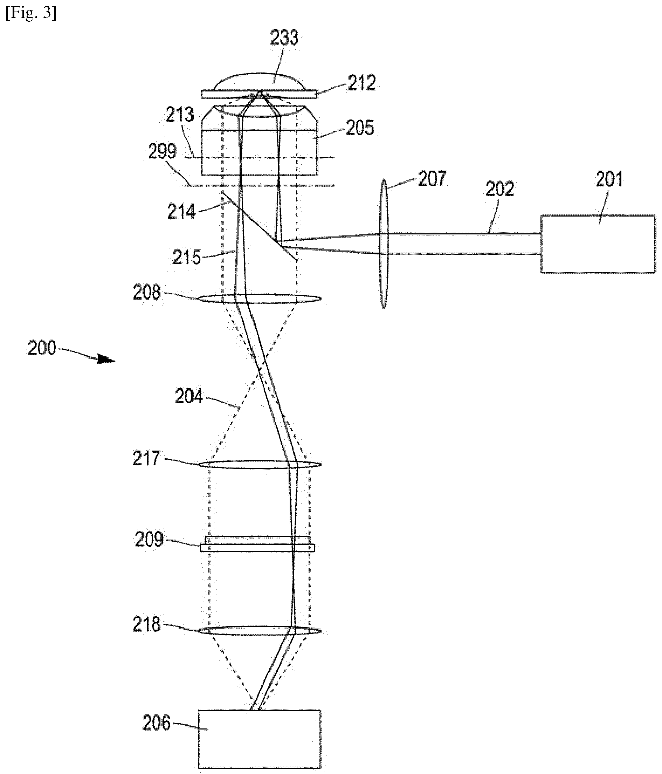

En référence à la [Fig.3], un deuxième mode de réalisation est présenté. Le faisceau lumineux incident est ici par exemple un faisceau laser incident 202. Le faisceau laser incident 202 émis par la source lumineuse 201 traverse la lentille convergente d'entrée, appelée ici la lentille convergente initiale 207 puis est réfléchi sur la lame séparatrice polarisante 214. Le faisceau laser incident 202 est alors réfléchi en direction de l'objectif de microscope 205.

Selon le deuxième mode de réalisation, le faisceau laser incident 202 est focalisé sur une position excentrée d'un milieu de la lame séparatrice polarisante 214. Le faisceau laser incident 202 est alors réfléchi en direction de l'objectif de microscope.

Le faisceau laser incident 202 traverse une lame à retard 299 qui est, selon un mode de réalisation, une lame quart d'onde.

Le faisceau laser incident 202 est focalisé sur un plan de Fourier 213 de l'objectif de microscope 205.

Le microscope optique 200 est de plus configuré de sorte que le faisceau laser incident 202 soit focalisé de façon excentrée par rapport à un milieu de l'axe optique de l'objectif de microscope 205. Ainsi, une distance à l'axe optique dans le plan de Fourier 213 permet de contrôler une inclinaison du faisceau laser incident 202 sur l'échantillon 233.

Ainsi, en sortie de l'objectif de microscope 205, le faisceau laser incident 202 éclaire une surface de l'échantillon 233 avec un angle d'incidence prédéfini et contrôlé par des paramètres du microscope optique 200.

La lamelle résonante 212 renvoie un faisceau laser réfléchi 215 et une lumière diffusée 204 émise par l'échantillon. Le faisceau lumineux sortant est donc ici constitué du faisceau laser réfléchi 215 et de la lumière diffusée 204. Le faisceau laser réfléchi 215 et la lumière diffusée 204 traversent l'objectif de microscope 205. Le faisceau laser réfléchi 215 est également focalisé sur le plan de Fourier 213 de l'objectif de microscope 205, en une autre position excentrée.

La lumière diffusée 204 et le faisceau laser réfléchi 215 traversent la lame séparatrice polarisante 214 puis traversent la lentille convergente de sortie, qui constitue ici une première lentille convergente de sortie 208, une deuxième lentille convergente de sortie 217, un filtre spatial 209 et une troisième lentille convergente de sortie 218 avant d'être

EP 4 591 108 B1

imagés sur une caméra 206.

Un plan focal image de la première lentille convergente de sortie 208 correspond à un plan focal objet de la deuxième lentille convergente de sortie 217. Le filtre spatial 209 est placé dans un plan focal image de la deuxième lentille convergente de sortie 217. Ainsi, le faisceau laser réfléchi 215 est focalisé sur le filtre spatial 209.

La troisième lentille convergente de sortie 218 focalise le faisceau laser réfléchi 215 et la lumière diffusée 204 sur la surface sensible de la caméra 206, qui est placée dans un plan focal image de la troisième lentille convergente de sortie 218.

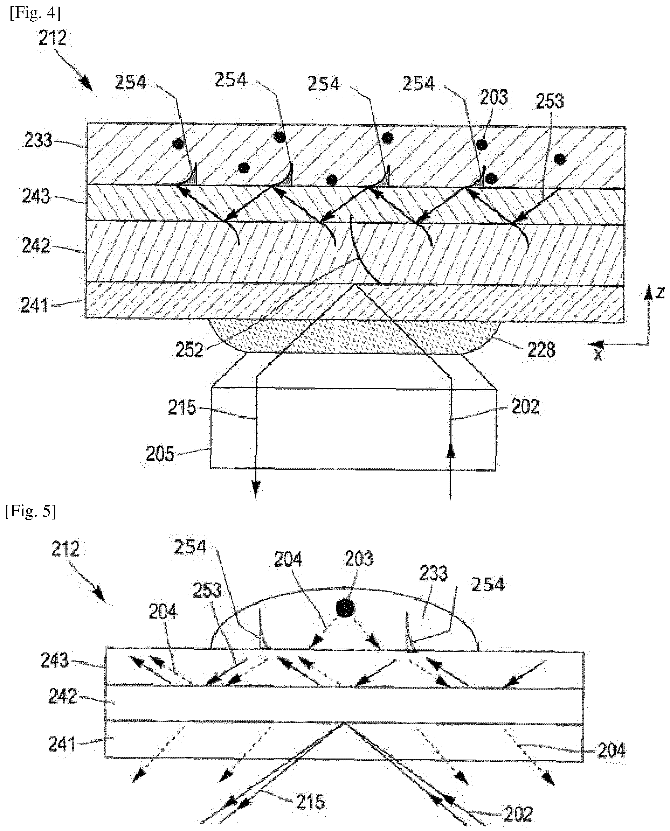

En référence aux figures 4 à 6, trois détails de la [Fig.3] sont représentés. La [Fig.4] représente l'objectif de microscope 205 ainsi que la lamelle résonante 212, ainsi que la propagation de la lumière dans la lamelle résonante 212.

Les flèches dessinées sur les figures 4 à 6 donnent bien entendu une représentation très schématique et très partielle de la propagation du champ électromagnétique. Elles ont seulement vocation à indiquer quelques directions de propagation significatives et non des dimensions des faisceaux lumineux.

L'objectif de microscope 205 est un objectif à huile, comportant une huile à immersion 228 ayant un indice optique identique à un indice optique du verre. La lamelle résonante 212 est placée contre l'objectif de microscope 205, en contact avec l'huile à immersion 228.

La lamelle résonante 212 est composée d'une pluralité de couches parallèles, disposées successivement dans une direction de l'axe optique du microscope. La lamelle résonante 212 comporte une lamelle de verre 241, la lamelle de verre 241 étant en contact avec l'huile à immersion 228.

Un espaceur 242 est placé de façon adjacente à la lamelle de verre 241. L'espaceur 242 présente un indice optique plus petit que la lamelle de verre 241. Selon un mode de réalisation, l'espaceur 242 est composé de fluorure de magnésium. Selon un mode de réalisation, une épaisseur de l'espaceur est de 485 nanomètres.

L'espaceur 242 est placé entre la lamelle de verre 241 et un guide d'onde 243. L'espaceur 242 présente un indice optique plus petit que celui du guide d'onde 243. Selon un mode de réalisation, le guide d'onde 243 est en dioxyde de titane. Selon un mode de réalisation, le guide d'onde 243 a une épaisseur de 45 nanomètres.

Le guide d'onde 243 est en contact avec l'échantillon 233, dans lequel une ou plusieurs nanoparticules 203 sont en suspension.

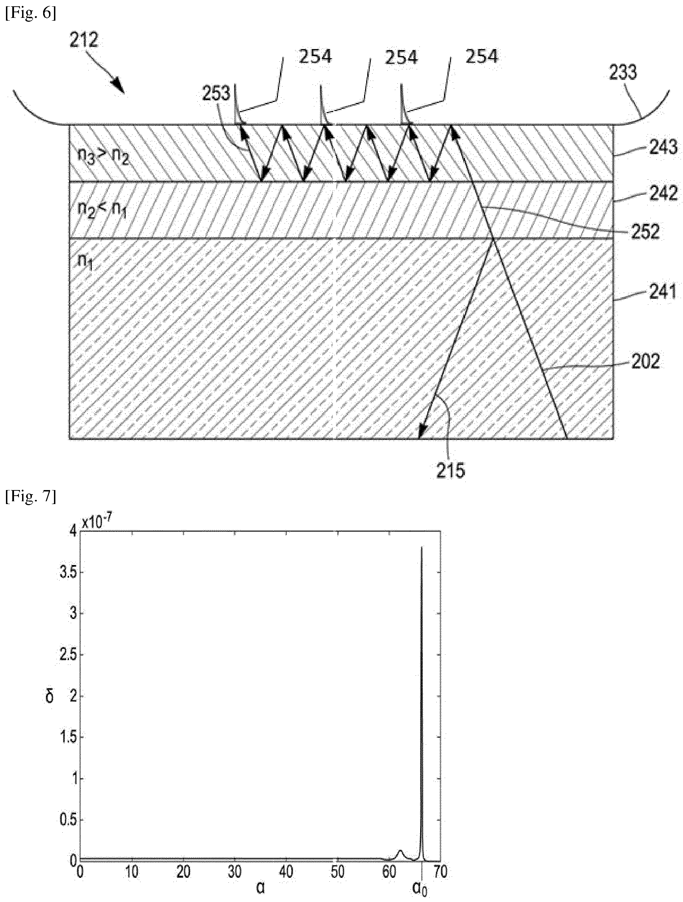

En référence à la [Fig.6], un indice optique $n_1$ de la lamelle de verre 241 est supérieur à un indice optique $n_2$ de l'espaceur 242. Ainsi, il existe un angle critique d'une interface entre la lamelle de verre 241 et l'espaceur 242, qui produit une réflexion totale.

En référence à la [Fig.4], le faisceau laser incident 202 est focalisé sur le plan de Fourier à une distance critique de l'axe optique de l'objectif de microscope, la distance critique étant telle que le faisceau laser incident 202 est projeté sur la lamelle résonante 212 avec un angle d'incidence supérieur à l'angle critique précité.

Ainsi, le faisceau laser incident 202 subit une réflexion totale frustrée à l'interface entre la lamelle de verre 241 et l'espaceur 242. Le faisceau laser réfléchi 215 est projeté vers l'objectif du microscope 205 avec le même angle d'incidence et traverse l'objectif du microscope 205.

Une onde évanescente 252 pénètre dans l'espaceur 242. Une épaisseur de l'espaceur 242 étant choisie pour être du même ordre de grandeur que la longueur de décroissance de l'onde évanescente 252, l'onde évanescente 252 n'est pas totalement atténuée au niveau de l'interface entre l'espaceur 242 et le guide d'onde 243. L'épaisseur de l'espaceur 242 peut être choisie de manière à contrôler l'exaltation du champ dans le guide d'onde 243. Plus l'espaceur 242 est épais, plus l'exaltation est grande.

En référence à la [Fig.6], un indice optique $n_3$ du guide d'onde 243 étant supérieur à un indice optique de l'espaceur 242, l'onde évanescente 252 venant de l'espaceur 242 est réfractée dans le guide d'onde 243 sous la forme d'une onde guidée 253.

La fréquence du faisceau laser incident 202 et l'angle d'incidence sont configurés pour que l'onde évanescente 252 excite de façon résonante un mode du guide d'onde 243. A cet effet, une configuration en « accord de phase » est réalisée.

En raison de l'excitation résonante du mode du guide d'onde 243, une onde exaltée 254 se propage alors dans l'échantillon 233 depuis le guide d'onde 243, avec une amplitude qui peut être exaltée d'un facteur d'exaltation élevé, par exemple pouvant valoir jusqu'à 1000. L'onde exaltée 254 se propage dans l'échantillon 233 et éclaire les nanoparticules 203.

En référence à la [Fig.5], la nanoparticule 203 éclairée par l'onde exaltée 254 émet une lumière diffusée 204 qui se propage dans la lamelle résonante 212 en direction de l'objectif de microscope (non représenté). Les traits pointillés correspondent à la lumière diffusée 204 et les traits pleins correspondent au faisceau laser incident 202, au faisceau réfracté sous la forme d'une onde guidée 253, au faisceau laser réfléchi 215 et aux pertes radiatives de l'onde guidée 253 au travers de l'espaceur 242.

En référence à la [Fig.7], on a représenté la densité d'énergie $\delta$ de la lumière diffusée 204 en ordonnées en fonction de l'angle de diffusion $\alpha$ en abscisse. La nanoparticule est située sur la lamelle résonante 212. La longueur d'onde utilisée est 515 nm. Les indices des couches 241 à 243 sont respectivement n1=1.518, n2=1.38 et n3=2.8 et les épaisseurs des couches 242 et 243 sont respectivement 484 nm et 45 nm.

L'angle de diffusion $\alpha$ est mesuré par rapport à l'axe optique dans l'huile à immersion 228. En raison du couplage de la lumière diffusée 204 avec mode résonant du guide d'onde 243, une puissance rayonnée de la lumière diffusée 204 en direction de l'objectif de microscope via le guide d'onde 243 s'échappe en majorité (environ 50%) selon un angle de pic de diffusion $\alpha_0$ prédéterminé en sortie de la lamelle résonante, ici à 66° environ par rapport à l'axe optique. Ainsi, la lumière diffusée 204 est un faisceau comportant un cône d'énergie maximale correspondant à l'angle de pic de diffusion $\alpha_0$.

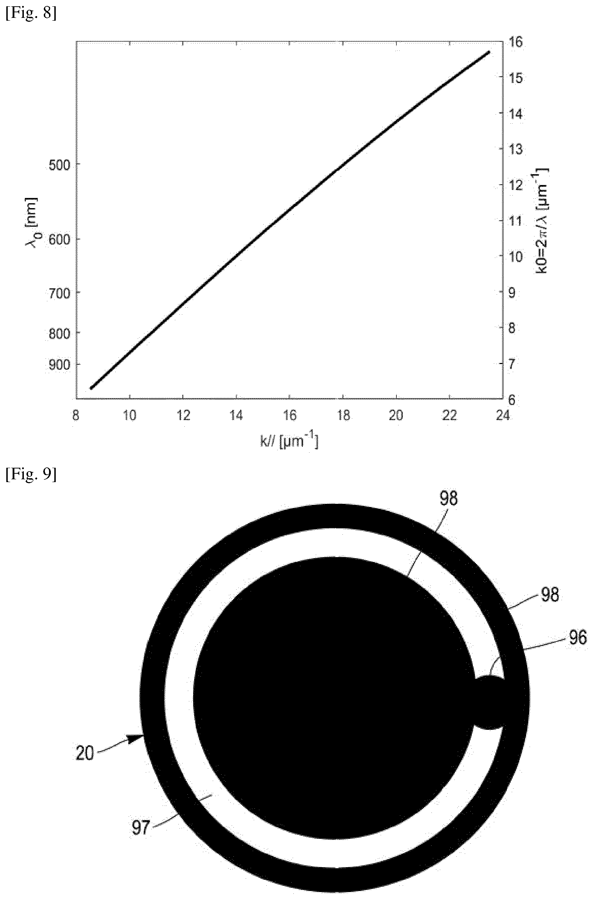

En référence à la [Fig.8], une relation de dispersion de la lamelle résonante 212 est représentée, reliant un vecteur d'onde spatial dans la lamelle résonante 212 avec une longueur d'onde du faisceau laser incident 202. Ainsi, le mode résonant de l'onde guidée 253 ne sera pas le même selon la longueur d'onde du faisceau laser incident 202. Ainsi, l'angle de pic de diffusion $\alpha_0$ de la lumière diffusée est aussi fonction de la longueur d'onde du faisceau laser incident 202.

On décrit maintenant comment le filtre spatial 209 peut tirer parti d'une telle distribution angulaire de l'énergie diffusée par la nanoparticule 203.

Comme le plan de Fourier de l'objectif 205 est imagé sur le filtre spatial 209 en sortie de la première lentille convergente de sortie 208 et de la deuxième lentille convergente de sortie 217, la distribution angulaire de la lumière diffusée 204 est préservée sur le filtre spatial 209. En termes de composante transverse du vecteur d'onde de propagation, le cône d'énergie maximale correspond sensiblement à un cercle ayant une certaine épaisseur, en d'autres termes à une couronne.

Ainsi, le filtre spatial 209 peut être utilisé, selon une première variante illustrée sur la [Fig.9], pour transmettre uniquement une portion de la lumière diffusée présente dans le cercle d'énergie maximale.

En référence à la [Fig.9], un premier filtre 20 pouvant être utilisé est présenté. Le premier filtre 20 comporte un premier cache 98 constitué de deux portions concentriques et configuré pour définir une couronne de transmission 97 configurée pour transmettre seulement la lumière diffusée correspondant au cône d'énergie maximale. En-dehors de la couronne de transmission 97, le premier cache 98 présente un coefficient de transmission préférentiellement nul (atténuation totale).

Pour former un filtre à champ sombre, le premier filtre 20 peut comporter aussi un deuxième cache 96 positionné dans la couronne de transmission 97 et configuré pour atténuer le faisceau laser réfléchi 215. De même, le deuxième cache 96 présente un coefficient de transmission d'intensité préférentiellement nul (atténuation totale), c'est-à-dire par exemple inférieur à $10^{-6}$.

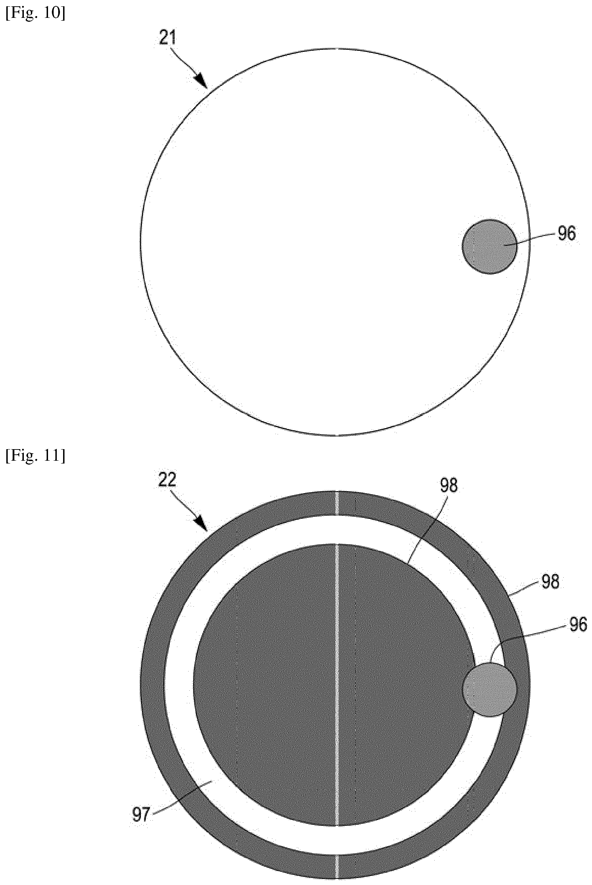

En référence à la [Fig.10], un deuxième filtre 21 peut être utilisé. Le deuxième filtre 21 ne comporte que le deuxième cache 96 configuré pour atténuer le faisceau réfléchi 215, avec une atténuation qui peut être totale ou partielle. Toute la lumière diffusée 204 est transmise. Si le coefficient de transmission d'intensité du deuxième cache 96 est sensiblement nul, par exemple inférieur à $10^{-6}$, le deuxième filtre 21 est un filtre à champ sombre. Si le coefficient de transmission du deuxième cache 96 est non nul, par exemple supérieur à $10^{-3}$, le deuxième filtre 21 est un filtre à champ clair interférométrique. Le microscope optique 200 est alors utilisé en configuration interférométrique

En référence à la [Fig.11], un deuxième filtre à champ clair interférométrique 22 est illustré. Le deuxième filtre à champ clair interférométrique 22 présente une structure analogue au filtre à champ sombre 20. Toutefois le deuxième cache 96 présente ici un coefficient de transmission non nul (atténuation partielle), et préférentiellement supérieur au coefficient de transmission du premier cache 98.

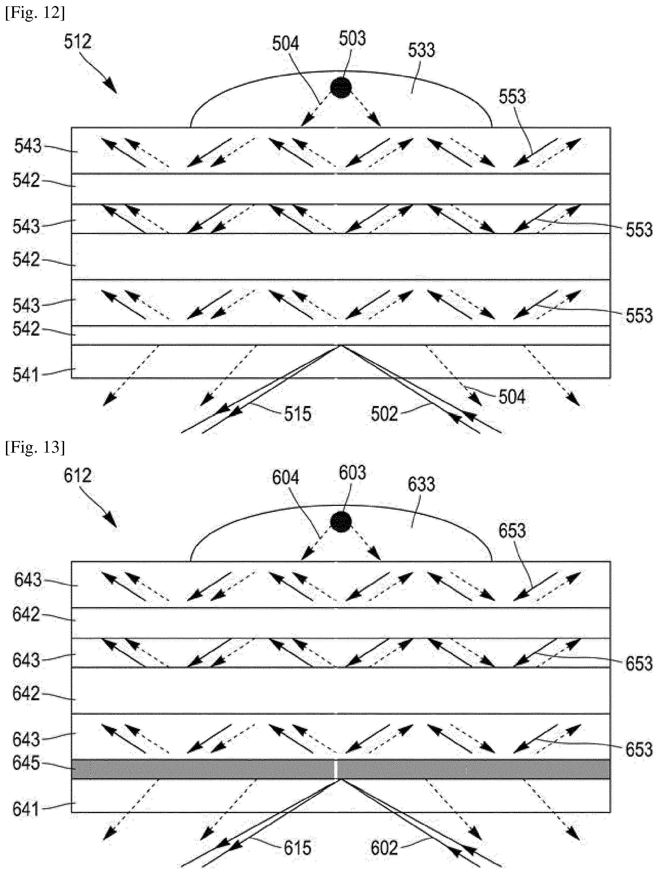

En référence aux figures 12 et 13, d'autres modes de réalisation de la lamelle résonante sont présentés.

En référence à la [Fig.12], les éléments analogues ou identiques à ceux du deuxième mode de réalisation portent le même chiffre de référence augmenté de 300. La [Fig.12] montre qu'il est possible d'augmenter un nombre de couches dans une lamelle résonante 512. En particulier, il est possible de placer de façon alternée une pluralité d'espaceurs 542 et une pluralité de guides d'onde 543. Des ondes évanescentes se propagent dans les espaceurs 542.

Les espaceurs 542 peuvent avoir des épaisseurs différentes et/ou des matériaux différents. Les guides d'onde 543 peuvent également avoir des épaisseurs différentes et/ou des matériaux différents. Des épaisseurs appropriées peuvent être typiquement comprises entre 100 nm et 1 $\mu$m.

La pluralité de guides d'onde 543 permet de coupler des modes résonants à plus de valeurs de la longueur d'onde et de l'angle d'incidence du faisceau laser incident 202. Ainsi, le microscope optique devient alors plus robuste à des variations de longueur d'onde et d'angles d'incidence d'un faisceau laser incident 502.

En outre, la pluralité de guides d'onde 543 permet d'augmenter une valeur d'amplitude d'une onde guidée résonante 553. Enfin, la pluralité de guides d'onde 543 permet au faisceau lumineux incident 502 d'exciter plusieurs modes résonants simultanément, ce qui provoque plusieurs pics angulaires d'énergie de la lumière diffusée 504 pour la nanoparticule 503, avec des pics angulaires d'énergie dans une pluralité de directions.

En référence à la [Fig.13], les éléments analogues ou identiques à ceux du deuxième mode de réalisation portent le même chiffre de référence augmenté de 400. La [Fig.13] montre que la lamelle résonante 612 peut comprendre un miroir 645 partiellement réfléchissant. Le miroir 645 peut être une couche de métal ou un miroir de Bragg et peut accentuer un phénomène de résonance dans la lamelle résonante 612. Des ondes évanescentes se propagent dans les espaceurs 642.

Sur les figures 12 et 13 on a représenté schématiquement une réflexion totale à l'interface entre la première couche 541 ou 641 et l'espaceur 542 ou 642. Toutefois, cette position de l'interface où la réflexion totale frustrée a lieu n'est pas limitative. D'autres couches de matériaux peuvent être insérées en dessous de l'interface où la réflexion totale frustrée a lieu.

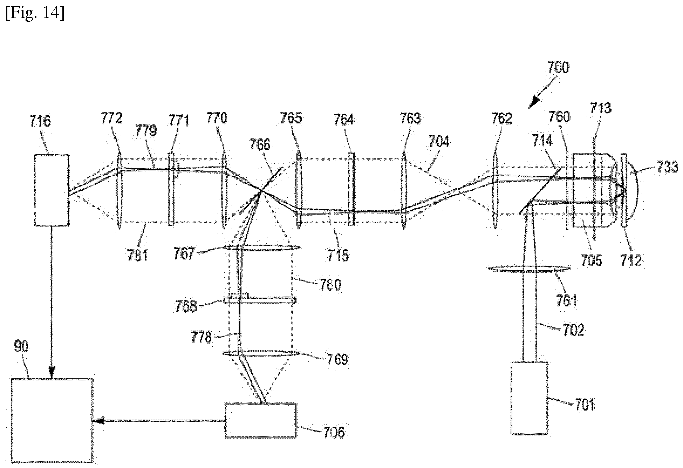

En référence à la [Fig.14], le troisième mode de réalisation du microscope optique 700 comprenant une lamelle résonante 712 peut être utilisé dans une configuration interférométrique en utilisant une technique de détection homodyne balancée.

La source lumineuse 701 du microscope optique 700 émet un faisceau laser incident 702, qui traverse la lentille convergente d'entrée, appelée ici la lentille convergente initiale 761, puis se réfléchit sur la lame séparatrice polarisante 714 qui est ici une première lame séparatrice polarisante 714. Le faisceau laser incident 702 est dirigé vers l'objectif de microscope 705, traverse la lamelle résonante 712 et illumine l'échantillon 733 disposé sur la surface de support de la lamelle résonante.

Le faisceau lumineux sortant comprend la lumière diffusée 704 et un faisceau réfléchi 715 qui traversent l'objectif de microscope 705 et la première lame séparatrice polarisante 714.

La lumière diffusée 704 et le faisceau réfléchi 715 traversent la lentille convergente de sortie, qui constitue ici une première lentille commune 762, une deuxième lentille commune 763, un filtre spatial 764 et une troisième lentille commune 765. La première lentille commune 762, la deuxième lentille commune 763 et la troisième lentille commune 765 sont des lentilles convergentes.

Une seconde lame séparatrice 766 est placée après la troisième lentille commune 765. La seconde lame séparatrice 766 sépare d'une part le faisceau réfléchi 715 en un premier faisceau réfléchi 778 et un deuxième faisceau réfléchi 779, et d'autre part, la lumière diffusée 704 en une première lumière diffusée 780 et une deuxième lumière diffusée 781.

Le premier faisceau réfléchi 778 et la première lumière diffusée 780 traversent une lentille initiale de premier bras 767 puis un premier masque de phase 768. Une lentille finale de premier bras 769 focalise le premier faisceau réfléchi 778 et la première lumière diffusée 780 sur une première caméra 706.

Le deuxième faisceau réfléchi 779 et la deuxième lumière diffusée 781 traversent une lentille initiale de deuxième bras 770 et un deuxième masque de phase 771. Une lentille finale de deuxième bras 772 focalise le deuxième faisceau réfléchi 779 et la deuxième lumière diffusée 781 sur une deuxième caméra 716.

Le premier masque de phase 768, respectivement le deuxième masque de phase 771, est configuré pour déphaser le premier faisceau réfléchi 778 par rapport à la première lumière diffusée 780, respectivement le deuxième faisceau réfléchi 779 par rapport à la deuxième lumière diffusée 781, d'un angle de déphasage φ respectif. Selon un mode de réalisation, l'angle de déphasage φ peut être de $\pi/2$ pour le premier masque de phase 768 et $-\pi/2$ pour le deuxième masque de phase 771.

Un système de traitement de données 90 peut soustraire une première intensité reçue par la première caméra 706 et une deuxième intensité reçue par la deuxième caméra 716, une différence entre la première intensité et la deuxième intensité s'exprimant :

$$I_{\mathrm{det}2} - I_{\mathrm{det}1} = 4\,K\,\sqrt{T\,I_i\,I_s}\,\cos(\varDelta\theta_2)$$

Une telle expression permet de ne conserver qu'un terme interférométrique et de filtrer un signal de référence.

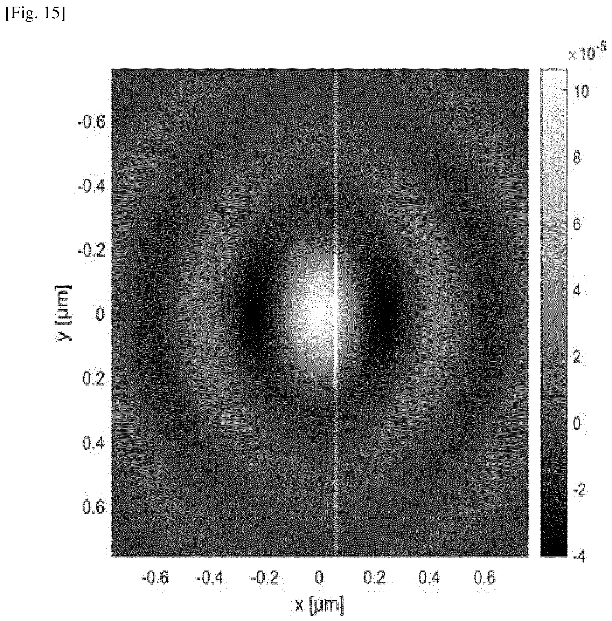

En référence aux figures 15 à 18, des résultats graphiques obtenus par simulation numérique sont présentés. Pour les figures 15, 17, et 18 qui montrent des résultats de microscopie en configuration interférométrique, l'échelle de couleur représente le contraste c comme défini plus haut.

En pratique le contraste c peut être calculé ou mesuré en tant que c=I/I_ref où I désigne l'intensité d'une image de la caméra et I_ref désigne l'intensité d'une image moyenne (ou image de référence). L'image de contraste représentée sur les figures 15, 17 et 18 est obtenue avec une division qui se fait pixel par pixel.

La [Fig.15] représente une image comparative obtenue dans un microscope de l'art antérieur sans lamelle résonante. Une tache centrale au centre de la figure d'interférences correspond à une détection de la nanoparticule.

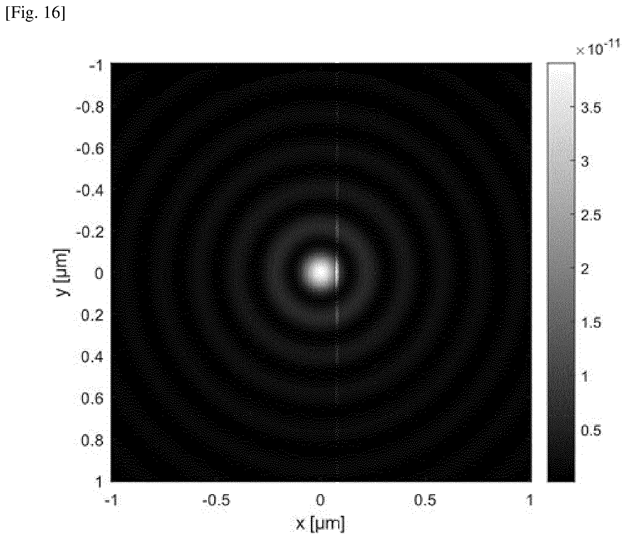

Les figures 16 à 17 représentent des résultats graphiques obtenus par simulation dans des scénarios où la lamelle résonante est utilisée.

La [Fig.16] correspond à un cas où le filtre à champ sombre 20 est utilisé. Sur cette figure, l'échelle de gris représente des intensités relatives, le noir (0) correspondant à un signal effectivement nul. Une tache centrale correspond à la nanoparticule. La tache centrale est plus nette, circulaire et de plus petit diamètre que sur la [Fig.15], ce qui indique un gain en résolution.

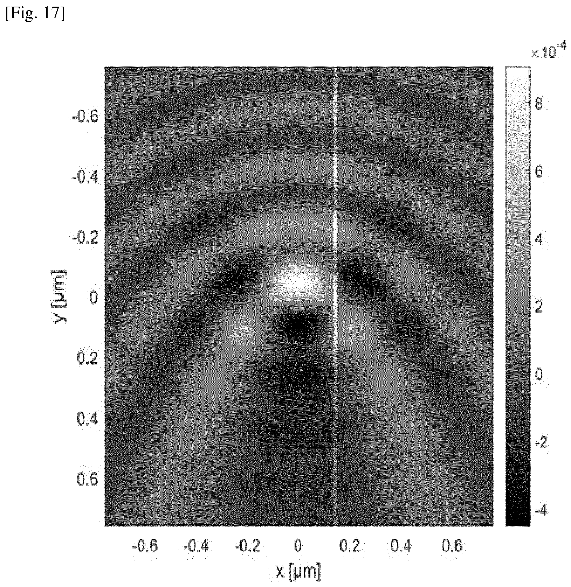

La [Fig.17] correspond à un cas où le filtre interférométrique 21 est utilisé. Le faisceau laser réfléchi 215 est alors filtré et atténué. La [Fig.17] présente une tache centrale au centre d'une figure d'interférences comportant plus d'arcs de cercle que l'image comparative. Une tache centrale se distingue néanmoins mieux que dans l'image comparative, ce qui indique également un gain en sensibilité.

La technique de filtrage spatial utilisée, qui s'apparente à rejeter tous les vecteurs d'onde sauf un, fait que l'image d'un point est imagée en une série de cercles. Pour autant, cela n'empêche pas de détecter une particule individuelle, même lorsque l'échantillon en contient plusieurs, pour autant les particules soient séparées spa-tialement les unes des autres dans l'échantillon.

Ainsi, indépendamment du filtre utilisé, un recours à une lamelle résonante permet d'augmenter la sensibilité du microscope optique.

En référence à la [Fig.18], un ensemble d'images de contraste est représenté, dans lequel une distance Z mesurée le long de l'axe optique entre la lamelle résonante 212 et une nanoparticule 203 varie d'une image à l'autre, comme indiqué au-dessus de chaque image. Cet exemple montre que des variations de contraste et de forme de la figure d'interférence peuvent être exploitées pour évaluer une distance de la nanoparticule 203 à la lamelle résonante 212.

Des techniques de traitement d'images peuvent être mises en œuvre afin de mener à une meilleure détection. Plusieurs images successives peuvent être enregistrées par la caméra, puis combinées en une image de référence. L'image de référence peut être une moyenne des images successives.

L'image de référence peut alors être soustraite d'une image reçue afin de filtrer un signal de référence et des bruits stationnaires.

Dans le cas d'une nanoparticule en mouvement, par exemple en suspension dans une solution, deux images successives peuvent être soustraites afin d'enlever un bruit de fond.

De plus, des filtres peuvent être appliqués au signal détecté, comme par exemple un filtre de convolution. Le filtre de convolution peut être un filtre gaussien.

Le contraste de l'image d'une particule détectée en mode de champ clair est proportionnel à la masse de la particule présente dans l'échantillon. Ainsi, il est possible par traitement de l'image d'effectuer une mesure quantitative de ce contraste et d'en déduire la masse de la particule, par comparaison avec un signal d'étalonnage, préalablement mesuré avec des particules de masse connue. Cette technique est particulièrement efficace pour des particules non absorbantes à la longueur d'onde utilisée, comme des protéines dans le spectre visible.

Les particules de masse connue sont choisies avec un indice optique très voisin de celui des particules à caractériser, par exemple en matière polymère lorsqu'il s'agit de caractériser de la matière organique.

Dans le quatrième mode de réalisation du microscope optique 800 représenté sur la [Fig.19], le faisceau lumineux incident 802 se propage à travers l'échantillon 833 : les nanoparticules diffusent la lumière du faisceau lumineux incident 802.

Si la particule est au voisinage de la lamelle résonante 812, une portion de la lumière diffusée est couplée au mode guidé.

Ainsi, une portion de la lumière diffusée 804 est couplée au mode guidé de la lamelle résonante 812 et une autre portion n'y est pas couplée. La lumière diffusée 804 sortant comprend alors une première portion de lumière diffusée ayant été couplée au mode guidé de la lamelle résonante 812 par des particules placées au voisinage de la lamelle, et une deuxième portion de lumière diffusée sans couplage. Le faisceau lumineux sortant est collecté par l'objectif de microscope 805 et se propage à travers un système de lentilles convergentes.

La lumière diffusée 804 et la portion non diffusée 815 du faisceau lumineux incident traversent la lentille convergente de sortie, qui constitue ici une première lentille convergente de sortie 808, une deuxième lentille convergente de sortie 817, un filtre spatial 809 et une troisième lentille convergente de sortie 818, avant d'être collectées par le détecteur optique, ici une caméra 806.

Un plan focal image de la première lentille convergente de sortie 808 correspond à un plan focal objet de la deuxième lentille convergente de sortie 817. Le filtre spatial 809 est placé dans un plan focal image de la deuxième lentille convergente de sortie 817. Il est placé dans un plan image du plan de Fourier 813 de l'objectif de microscope 805. Ainsi, la portion non diffusée 815 du faisceau lumineux incident est focalisée sur le filtre spatial 809 et peut être bloquée par le filtre.

La troisième lentille convergente de sortie 818 focalise la lumière diffusée 804 sur la surface sensible de la caméra 806, qui est placée dans un plan focal image de la troisième lentille convergente de sortie 218.

Le filtre 809 permet d'atténuer la portion non diffusée 815 du faisceau lumineux sortant et la deuxième portion de la lumière diffusée. Ce filtre 809 est par exemple similaire au filtre 22 de la [Fig.11]. Il peut par exemple s'agir d'un filtre à champ clair interférométrique de structure analogue au filtre 22 de la [Fig.11], à ceci près que le deuxième cache 96 qui atténue la lumière d'éclairement est placé au centre du filtre Le deuxième cache et le premier cache 98 présentent par exemple des coefficients de transmission différents. Le deuxième cache présente par exemple un coefficient de transmission supérieur à celui du premier cache.

Comme dans le microscope optique 100, 200, 700 illuminant l'échantillon en réflexion, tel que décrit dans les premier, deuxième et troisième modes de réalisation, environ une moitié de l'énergie diffusée par chaque particule de l'échantillon 833 est contenue dans le mode résonant de la lamelle résonante 812, donc dans la première portion de la lumière diffusée 804. Le filtre 809 filtre largement le faisceau lumineux sortant de manière à bloquer autant que possible la portion non diffusée 815 du faisceau lumineux incident 802, sans bloquer la lumière diffusée, en particulier, sans bloquer la première portion de la lumière diffusée ayant été couplée au mode résonant de la lamelle résonante 812. Cela est rendu possible par l'émission directive de la première portion de la lumière diffusée ayant été couplée au mode résonant de la lamelle résonante 812, comme cela a été décrit en référence aux modes de réalisation en réflexion du microscope optique.

De manière avantageuse, la diminution de l'intensité du faisceau lumineux incident permet d'augmenter le contraste de l'image de l'échantillon formée sur le capteur de la caméra. Cela est également le cas pour le microscope optique en réflexion décrit précédemment.

Contrairement aux modes de réalisation du microscope optique utilisant une illumination de l'échantillon en réflexion, le faisceau lumineux incident 802 illumine la totalité de l'épaisseur de l'échantillon 833 et non juste les premières centaines de nanomètres d'échantillon au contact avec la lamelle résonante, comme cela était le cas dans la configuration en réflexion. Ainsi, en plus du fonctionnement décrit ci-dessus, il est possible d'utiliser le microscope optique sans le filtre 809, dans une configuration dans laquelle un plus grand volume de l'échantillon est éclairé pour détecter des particules un peu défocalisées. Cela est en particulier utile pour suivre le mouvement de particules diffusantes dans l'échantillon.

Grâce à la configuration en transmission du microscope optique 800, le faisceau lumineux sortant est exempt de réflexions arrière du faisceau lumineux incident sur les multiples lentilles composant l'objectif de microscope 805. Ces réflexions arrière sont présentes dans la configuration en réflexion et constituent un signal parasite, en d'autres termes, un bruit. Leur élimination augment le rapport signal sur bruit de l'image détectée.

On a décrit ici un mode de réalisation du microscope optique à lamelle résonante en transmission. On peut évidemment envisager d'autres modes de réalisation en transmission, notamment un mode de réalisation en transmission simplifié similaire au premier mode de réalisation en réflexion, dans lequel les deuxième et troisième lentilles convergentes de sortie sont supprimées ainsi que le filtre. On peut également envisager un mode de réalisation du microscope optique en transmission utilisé dans une configuration interférométrique en utilisant une technique de détection homodyne balancée dans lequel le faisceau lumineux sortant parcours un chemin optique en sortie de la lamelle résonante similaire à celui parcouru par le faisceau lumineux sortant après la première lame séparatrice polarisante dans le troisième mode de réalisation en réflexion décrit ci-dessus.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Microscope optique (100, 200, 700, 800) comprenant :

   - une source lumineuse (101, 201, 701, 801) émettant une lumière d'éclairement (102, 202, 502, 602, 702, 802) adaptée à éclairer un échantillon (133, 233, 733, 833) à imager,
   - un dispositif optique comportant un objectif de microscope (105, 205, 705, 805),
   - un résonateur (112 , 212, 512, 612, 712, 812) comportant, successivement dans une direction d'un axe optique de l'objectif de microscope, au moins une première couche (241, 541, 641) présentant un premier indice optique, au moins une couche d'espacement (242, 542, 642) présentant un deuxième indice optique et au moins une couche de guide d'onde (243, 543, 643) présentant un troisième indice optique, le deuxième indice optique étant inférieur au premier indice optique et au troisième indice optique, le résonateur présentant une surface de support opposée au dispositif optique et destinée à recevoir l'échantillon (133, 233, 733, 833),
   - un détecteur optique (106, 206, 706, 716, 806),
   le dispositif optique étant agencé pour collecter une lumière sortante du résonateur (112 , 212, 512, 612, 712, 812) et diriger la lumière sortante depuis ledit résonateur (112 , 212, 512, 612, 712, 812) vers le détecteur optique pour former une image de l'échantillon (133, 233, 733, 833) sur le détecteur optique (106, 206, 706, 716, 806), la lumière sortante comportant une lumière diffusée (104, 204, 504, 604, 704, 804) par l'échantillon et une portion non diffusée (115, 215, 715, 815) de la lumière d'éclairement (102, 202, 502, 602, 702, 802).

2. Microscope optique (100, 200, 700, 800) selon la revendication 1, dans lequel le dispositif optique comporte un filtre d'amplitude (209, 764, 20, 21, 22, 809) disposé entre l'objectif de microscope (105, 205, 705, 805) et le détecteur optique (106, 206, 706, 716, 806), et configuré pour appliquer une première atténuation sélective à la portion non diffusée (115, 215, 715, 815) de la lumière d'éclairement.

**3.** Microscope optique (100, 200, 700, 800) selon la revendication 2, dans lequel le coefficient de transmission d'intensité associé à la première atténuation est inférieur à $10^{-6}$.

**4.** Microscope optique (100, 200, 700, 800) selon la revendication 2 ou 3, dans lequel la lumière diffusée par l'échantillon est constituée d'une première portion de lumière diffusée provenant du ou des modes excités de façon résonante et d'une deuxième portion de lumière diffusée, le filtre d'amplitude (209, 764, 20, 22, 809) étant en outre configuré pour appliquer une deuxième atténuation sélective à la deuxième portion de lumière diffusée.

**5.** Microscope optique (100, 200, 700, 800) selon la revendication 4, dans lequel le coefficient de transmission d'intensité associé à la deuxième atténuation sélective est inférieur à $10^{-6}$.

**6.** Microscope optique (100, 200, 700, 800) selon la revendication 2 prise en combinaison avec la revendication 4, dans lequel le coefficient de transmission d'intensité associé à la première atténuation est supérieur au coefficient de transmission d'intensité associé à la deuxième atténuation.

**7.** Microscope optique (200, 700, 800) selon l'une des revendications 2 à 6, dans lequel le dispositif optique comporte deux lentilles convergentes (208, 217, 808, 817) agencées pour imager un plan de Fourier (213, 713, 813) de l'objectif de microscope (205, 705, 805) sur ledit filtre d'amplitude (209, 764, 809).

**8.** Microscope optique (100, 200, 700, 800) selon l'une des revendications précédentes, dans lequel la lumière d'éclairement (102, 202, 502, 602, 702, 802) est un faisceau laser.

**9.** Microscope optique (100, 200, 700, 800) selon l'une des revendications précédentes, dans lequel le dispositif optique comprend au moins une lentille convergente (108, 218, 769, 772, 808) traversée par la lumière sortante, la lentille convergente (108, 218, 769, 772, 808) étant configurée pour imager un plan objet de l'objectif de microscope (105, 205, 705, 805) sur ledit détecteur optique (106, 206, 706, 716, 806).

**10.** Microscope optique (100, 200, 700, 800) selon l'une des revendications précédentes, comportant de plus un système de traitement d'images, le système de traitement d'images étant configuré pour :

- enregistrer une pluralité d'images détectées par le détecteur optique à des instants successifs,
- combiner la pluralité d'images en une image de référence,
- traiter au moins une image détectée par le détecteur optique avec l'image de référence de manière à supprimer des signaux statiques.

**11.** Microscope optique (100, 200, 700, 800) selon l'une des revendications 1 à 10, comportant de plus un système de traitement d'images, le système de traitement d'images étant configuré pour :

déterminer un contraste dans une image détectée par le détecteur optique,
déterminer au moins un paramètre d'une particule contenue dans l'échantillon en fonction dudit contraste, ledit paramètre étant choisi dans le groupe constitué d'une masse de la particule et une position de la particule dans la direction de l'axe optique.

**12.** Microscope optique (100, 200, 700) selon l'une des revendications 1 à 11, dans lequel la source lumineuse (101, 201, 701) et le dispositif optique sont agencés pour éclairer l'échantillon (133, 233, 733) placé sur la surface de support du résonateur (112, 212, 512, 612, 712) en réflexion.

**13.** Microscope optique (100, 200, 700) selon la revendication 12, dans lequel le dispositif optique reçoit la lumière d'éclairement (102, 202, 502, 602, 702) pour diriger la lumière d'éclairement sur l'échantillon (133, 233, 733), l'objectif de microscope (105, 205, 705) du dispositif optique étant configuré pour diriger la lumière d'éclairement (102, 202, 502, 602, 702) sur le résonateur (112, 212, 712) avec un angle d'incidence supérieur à un angle critique d'une interface entre la première couche (241, 541, 641) et la couche d'espacement (242, 542, 642), de manière que la lumière d'éclairement (102, 202, 502, 602, 702) excite de façon résonante au moins un mode dans la couche de guide d'onde (243, 543, 643) et éclaire l'échantillon (133, 233, 733) par une onde évanescente exaltée.

**14.** Microscope optique (100, 200, 700) selon l'une des revendications 12 à 13, dans lequel le dispositif optique comporte une lame séparatrice polarisante (114, 214, 714), la lame séparatrice polarisante (114, 214, 714) réfléchissant la lumière d'éclairement (102, 202, 502, 602, 702)) en direction de l'objectif de microscope (105, 205, 705) et étant traversée par la lumière sortante.

**15.** Microscope optique (700) selon la revendication 14, dans lequel le détecteur optique est un premier détecteur optique (706), le microscope optique comprenant un second détecteur optique (716), le dispositif optique comprenant une lame séparatrice non polarisante (766), la lame séparatrice non polarisante recevant la lumière sortante (704, 715) et séparant la lumière sortante en une première portion de lumière sortante dirigée vers le premier détecteur (706) et une seconde portion de lumière sortante dirigée vers le second détecteur (716), la première portion de lumière sortante comportant une première portion de lumière réfléchie (778) et une première portion de lumière diffusée (780), un masque de phase (768) étant agencé pour être traversé par la première portion de lumière sortante, le masque de phase (768) étant configuré pour appliquer un déphasage entre la première portion de lumière réfléchie et la première portion de lumière diffusée.

**16.** Microscope optique (700) selon la revendication 16, dans lequel le masque de phase est un premier masque de phase (768), le dispositif optique comportant de plus un second masque de phase (771) agencé pour être traversé par la seconde portion de lumière sortante, la seconde portion de lumière sortante comportant une seconde portion de lumière réfléchie (779) et une seconde portion de lumière diffusée (781), le second masque de phase (771) étant configuré pour appliquer un déphasage entre la seconde portion de lumière réfléchie et la seconde portion de lumière diffusée, le premier masque de phase et le second masque de phase présentant des propriétés de phase différentes.

**17.** Microscope optique (100, 200, 700) selon l'une des revendications précédentes, dans lequel le dispositif optique comporte un condenseur optique (107, 207, 761) recevant la lumière d'éclairement en sortie de la source lumineuse, le condenseur optique (107, 207, 761) étant configuré pour focaliser la lumière d'éclairement dans un plan de Fourier (113, 213, 713) de l'objectif de microscope (105, 205, 705) sur une zone distante de l'axe optique de l'objectif de microscope pour produire ledit angle d'incidence.

**18.** Microscope optique (800) selon l'une des revendications 1 à 11, dans lequel le résonateur (812) est disposé entre l'objectif de microscope (805) et la source lumineuse (801) le long de l'axe optique dudit objectif de microscope (805) de sorte que la source lumineuse (802) soit adaptée à éclairer l'échantillon (833) reçu par la surface de support du résonateur (812) en transmission.

**Patentansprüche**

**1.** Optisches Mikroskop (100, 200, 700, 800) umfassend:

- eine Lichtquelle (101, 201, 701, 801), die Beleuchtungslicht (102, 202, 502, 602, 702, 802) ausstrahlt, das zum Beleuchten einer abzubildenden Probe (133, 233, 733, 833) geeignet ist,
- eine optische Vorrichtung mit einem Mikroskopobjektiv (105, 205, 705, 805),
- einen Resonator (112 , 212, 512, 612, 712, 812), der in Richtung einer optischen Achse des Mikroskopobjektivs nacheinander mindestens eine erste Schicht (241, 541, 641) mit einem ersten Brechungsindex, mindestens eine Abstandsschicht (242, 542, 642) mit einem zweiten optischen Index und mindestens eine Wellenleiterschicht (243, 543, 643) mit einem dritten optischen Index aufweist, wobei der zweite optische Index niedriger ist als der erste optische Index und der dritte optische Index, wobei der Resonator eine der optischen Vorrichtung gegenüberliegende Auflagefläche zur Aufnahme der Probe (133, 233, 733, 833) aufweist,
- einen optischen Detektor (106, 206, 706, 716, 806),
wobei die optische Vorrichtung so angeordnet ist, dass sie aus dem Resonator (112 , 212, 512, 612, 712, 812) austretendes Licht sammelt und das aus dem Resonator (112, 212, 512, 612, 712, 812) austretende Licht zum optischen Detektor lenkt, um ein Bild der Probe (133, 233, 733, 833) auf dem optischen Detektor (106, 206, 706, 716, 806) zu erzeugen,
wobei das austretende Licht ein gestreutes Licht (104, 204, 504, 604, 704, 804) durch die Probe und einen nicht gestreuten Anteil (115, 215, 715, 815) des Beleuchtungslichts (102, 202, 502, 602, 702, 802) umfasst.

**2.** Optisches Mikroskop (100, 200, 700, 800) gemäß Anspruch 1, wobei die optische Vorrichtung ein Amplitudenfilter (209, 764, 20, 21, 22, 809) umfasst, der zwischen dem Mikroskopobjektiv (105, 205, 705, 805) und dem optischen Detektor (106, 206, 706, 716, 806) angeordnet ist und so konfiguriert ist, dass er eine erste selektive Dämpfung auf den nicht gestreuten Teil (115, 215, 715, 815) des Beleuchtungslichts anwendet.

**3.** Optisches Mikroskop (100, 200, 700, 800) gemäß Anspruch 2, wobei der Intensitätstransmissionskoeffizient, der mit der ersten Attenuation verbunden ist, kleiner als 10$^{-6}$ ist.

4. Optisches Mikroskop (100, 200, 700, 800) gemäß Anspruch 2 oder 3, wobei das von der Probe gestreute Licht aus einem ersten Teil des gestreuten Lichts, das von dem oder den resonant angeregten Zuständen stammt, und einem zweiten Teil des gestreuten Lichts besteht, wobei der Amplitudenfilter (209, 764, 20, 22, 809) weiterhin so konfiguriert ist, dass er eine zweite selektive Attenuation auf den zweiten Teil des gestreuten Lichts anwendet.

5. Optisches Mikroskop (100, 200, 700, 800) gemäß Anspruch 4, wobei der Intensitätstransmissionskoeffizient, der mit der zweiten Attenuation verbunden ist, kleiner als 10$^{-6}$ ist.

6. Optisches Mikroskop (100, 200, 700, 800) gemäß Anspruch 2 in Kombination mit Anspruch 4, wobei der Intensitätstransmissionskoeffizient, der mit der ersten Attenuation verbunden ist, größer ist als der Intensitätstransmissionskoeffizient, der mit der zweiten Attenuation verbunden ist.

7. Optisches Mikroskop (200, 700, 800) gemäß einem der Ansprüche 2 bis 6, wobei die optische Vorrichtung zwei konvergierende Linsen (208, 217, 808, 817) umfasst, die so angeordnet sind, dass sie eine Fourierebene (213, 713, 813) des Mikroskopobjektivs (205, 705, 805) auf dem Amplitudenfilter (209, 764, 809) abbilden.

8. Optisches Mikroskop (100, 200, 700, 800) gemäß einem der vorstehenden Ansprüche, wobei das Beleuchtungslicht (102, 202, 502, 602, 702, 802) ein Laserstrahl ist.

9. Optisches Mikroskop (100, 200, 700, 800) gemäß einem der vorstehenden Ansprüche, wobei die optische Vorrichtung mindestens eine vom austretenden Licht durchlaufene Sammellinse (108, 218, 769, 772, 808) umfasst, wobei die Sammellinse (108, 218, 769, 772, 808) so konfiguriert ist, dass sie eine Objektebene des Mikroskopobjektivs (105, 205, 705, 805) auf dem optischen Detektor (106, 206, 706, 716, 806) abbildet.

10. Optisches Mikroskop (100, 200, 700, 800) gemäß einem der vorstehenden Ansprüche, das zusätzlich ein Bildverarbeitungssystem umfasst, wobei das Bildverarbeitungssystem konfiguriert ist, um:

   - eine Vielzahl von Bildern, die vom optischen Detektor zu aufeinanderfolgenden Zeitpunkten erfasst werden, aufzuzeichnen,
   - die Vielzahl von Bildern zu einem Referenzbild zu kombinieren,
   - mindestens ein vom optischen Detektor erfasstes Bild mit dem Referenzbild zu verarbeiten, um statische Signale zu unterdrücken.

11. Optisches Mikroskop (100, 200, 700, 800) gemäß einem der Ansprüche 1 bis 10, das zusätzlich ein Bildverarbeitungssystem umfasst, wobei das Bildverarbeitungssystem konfiguriert ist, um:
   einen Kontrast in einem vom optischen Detektor erfassten Bild zu bestimmen, mindestens einen Parameter eines in der Probe enthaltenen Partikels in Abhängigkeit von dem Kontrast zu bestimmen, wobei der Parameter aus der Gruppe ausgewählt ist, die aus einer Masse des Partikels und einer Position des Partikels in Richtung der optischen Achse besteht.

12. Optisches Mikroskop (100, 200, 700) gemäß einem der Ansprüche 1 bis 11, wobei die Lichtquelle (101, 201, 701) und die optische Vorrichtung so angeordnet sind, um die Probe (133, 233, 733), die auf der Oberfläche des Resonators (112, 212, 512, 612, 712) angeordnet ist, reflektierend zu beleuchten.

13. Optisches Mikroskop (100, 200, 700) gemäß Anspruch 12, wobei die optische Vorrichtung das Beleuchtungslicht (102, 202, 502, 602, 702) empfängt, um das Beleuchtungslicht zur Probe (133, 233, 733) zu lenken, wobei das Mikroskopobjektiv (105, 205, 705) der optischen Vorrichtung konfiguriert ist, um das Beleuchtungslicht (102, 202, 502, 602, 702) auf den Resonator (112, 212, 712) mit einem Einfallswinkel zu lenken, der größer ist als ein kritischer Winkel einer Schnittstelle zwischen der ersten Schicht (241, 541, 641) und der Abstandsschicht (242, 542, 642), so dass das Beleuchtungslicht (102, 202, 502, 602, 702) mindestens eine Mode in der Wellenleiterschicht (243, 543, 643) resonant anregt und die Probe (133, 233, 733) mit einer verstärkt evaneszenten Welle beleuchtet.

14. Optisches Mikroskop (100, 200, 700) gemäß einem der Ansprüche 12 bis 13, wobei die optische Vorrichtung eine polarisierende Strahlteilerplatte (114, 214, 714) umfasst, wobei die polarisierende Strahlteilerplatte (114, 214, 714) das Beleuchtungslicht (102, 202, 502, 602, 702) in Richtung des Mikroskopobjektivs (105, 205, 705) reflektiert und von dem austretenden Licht durchlaufen durchlaufbar ist.

**15.** Optisches Mikroskop (700) gemäß Anspruch 14, wobei der optische Detektor ein erster optischer Detektor (706) ist, wobei das optische Mikroskop einen zweiten optischen Detektor (716) umfasst, wobei die optische Vorrichtung eine nicht polarisierende Strahlteilerplatte (766) umfasst, wobei die nicht polarisierende Strahlteilerplatte das austretende Licht (704, 715) empfängt und das austretende Licht in einen ersten Teil des austretenden Lichts, der zum ersten Detektor (706) gerichtet ist, und einen zweiten Teil des austretenden Lichts, der zum zweiten Detektor (716) gerichtet ist, trennt, wobei der erste Teil des austretenden Lichts einen ersten Teil des reflektierten Lichts (778) und einen ersten Teil des gestreuten Lichts (780) umfasst, wobei eine Phasenmaske (768) so angeordnet ist, dass sie von dem ersten Teil des austretenden Lichts durchlaufbar ist, wobei die Phasenmaske (768) so konfiguriert ist, dass sie eine Phasenverschiebung zwischen dem ersten Teil des reflektierten Lichts und dem ersten Teil des gestreuten Lichts bewirkt.

**16.** Optisches Mikroskop (700) gemäß Anspruch 16, wobei die Phasenmaske eine erste Phasenmaske (768) ist, wobei die optische Vorrichtung ferner eine zweite Phasenmaske (771) umfasst, die so angeordnet ist, dass sie vom zweiten Teil des austretenden Lichts durchlaufen wird, wobei der zweite Teil des austretenden Lichts einen zweiten Teil des reflektierten Lichts (779) und einen zweiten Teil des gestreuten Lichts (781) umfasst, wobei die zweite Phasenmaske (771) so konfiguriert ist, dass sie eine Phasenverschiebung zwischen dem zweiten reflektierten Lichtanteil und dem zweiten gestreuten Lichtanteil bewirkt, wobei die erste Phasenmaske und die zweite Phasenmaske unterschiedliche Phaseneigenschaften aufweisen.

**17.** Optisches Mikroskop (100, 200, 700) gemäß einem der vorstehenden Ansprüche, wobei die optische Vorrichtung einen optischen Kondensor (107, 207, 761) umfasst, der das von der Lichtquelle ausgehende Beleuchtungslicht empfängt, wobei der optische Kondensor (107, 207, 761) so konfiguriert ist, dass er das Beleuchtungslicht in einer Fourierebene (113, 213, 713) des Mikroskopobjektivs (105, 205, 705) auf einen Bereich fokalisiert, der von der optischen Achse des Mikroskopobjektivs beabstandet ist, um den genannten Einfallswinkel zu erzeugen.

**18.** Optisches Mikroskop (800) gemäß einem der Ansprüche 1 bis 11, wobei der Resonator (812) zwischen dem Mikroskopobjektiv (805) und der Lichtquelle (801) entlang der optischen Achse des Mikroskopobjektivs (805) angeordnet ist, so dass die Lichtquelle (802) die Probe (833), die von der Trägerfläche des Resonators (812) in Transmission empfangbar ist, beleuchten kann.

## Claims

**1.** An optical microscope (100, 200, 700, 800) comprising:

- a light source (101, 201, 701, 801) emitting illumination light (102, 202, 502, 602, 702, 802) adapted to illuminate a sample (133, 233, 733, 833) to be imaged,
- an optical device comprising a microscope objective (105, 205, 705, 805),
- a resonator (112, 212, 512, 612, 712, 812) comprising, successively in a direction of an optical axis of the microscope objective, at least one first layer (241, 541, 641) having a first optical index, at least one spacer layer (242, 542, 642) having a second optical index, and at least one waveguide layer (243, 543, 643) having a third optical index, the second optical index being less than the first optical index and the third optical index, the resonator having a support surface facing away from the optical device and intended to receive the sample (133, 233, 733, 833),
- an optical detector (106, 206, 706, 716, 806),
the optical device being arranged to collect light exiting the resonator (112, 212, 512, 612, 712, 812) and to direct the outgoing light from said resonator (112, 212, 512, 612, 712, 812) to the optical detector in order to form an image of the sample (133, 233, 733, 833) on the optical detector (106, 206, 706, 716, 806),
the outgoing light comprising light scattered (104, 204, 504, 604, 704, 804) by the sample and a non-scattered portion (115, 215, 715, 815) of the illumination light (102, 202, 502, 602, 702, 802).

**2.** The optical microscope (100, 200, 700, 800) as claimed in claim 1, wherein the optical device comprises an amplitude filter (209, 764, 20, 21, 22, 809) arranged between the microscope objective (105, 205, 705, 805) and the optical detector (106, 206, 706, 716, 806), and configured to apply a first selective attenuation to the non-scattered portion (115, 215, 715, 815) of the illumination light.

**3.** The optical microscope (100, 200, 700, 800) as claimed in claim 2, wherein the intensity transmission coefficient associated with the first attenuation is less than $10^{-6}$.

4. The optical microscope (100, 200, 700, 800) as claimed in claim 2 or 3, wherein the light scattered by the sample consists of a first portion of scattered light from the resonantly excited mode(s) and a second portion of scattered light, the amplitude filter (209, 764, 20, 22, 809) being further configured to apply a second selective attenuation to the second portion of scattered light.

5. The optical microscope (100, 200, 700, 800) as claimed in claim 4, wherein the intensity transmission coefficient associated with the second selective attenuation is less than $10^{-6}$.

6. The optical microscope (100, 200, 700, 800) as claimed in claim 2 in combination with claim 4, wherein the intensity transmission coefficient associated with the first attenuation is greater than the intensity transmission coefficient associated with the second attenuation.

7. The optical microscope (200, 700, 800) as claimed in one of claims 2 to 6, wherein the optical device comprises two convergent lenses (208, 217, 808, 817) arranged to image a Fourier plane (213, 713, 813) of the microscope objective (205, 705, 805) on said amplitude filter (209, 764, 809).

8. The optical microscope (100, 200, 700, 800) as claimed in one of the preceding claims, wherein the illumination light (102, 202, 502, 602, 702, 802) is a laser beam.

9. The optical microscope (100, 200, 700, 800) as claimed in one of the preceding claims, wherein the optical device comprises at least one convergent lens (108, 218, 769, 772, 808) through which the outgoing light passes, the convergent lens (108, 218, 769, 772, 808) being configured to image an object plane of the microscope objective (105, 205, 705, 805) on said optical detector (106, 206, 706, 716, 806).

10. The optical microscope (100, 200, 700, 800) as claimed in one of the preceding claims, further comprising an image processing system, the image processing system being configured to:

   - record a plurality of images detected by the optical detector at successive times,
   - combine the plurality of images into a reference image,
   - process at least one image detected by the optical detector with the reference image so as to suppress static signals.

11. The optical microscope (100, 200, 700, 800) as claimed in one of claims 1 to 10, further comprising an image processing system, the image processing system being configured to:

   determine a contrast in an image detected by the optical detector,
   determine at least one parameter of a particle contained in the sample as a function of said contrast, said parameter being selected from the group consisting of a mass of the particle and a position of the particle in the direction of the optical axis.

12. The optical microscope (100, 200, 700) as claimed in one of claims 1 to 11, wherein the light source (101, 201, 701) and the optical device are arranged to illuminate the sample (133, 233, 733) placed on the support surface of the resonator (112, 212, 512, 612, 712) in reflection.

13. The optical microscope (100, 200, 700) as claimed in claim 12, wherein the optical device receives the illumination light (102, 202, 502, 602, 702) in order to direct the illumination light onto the sample (133, 233, 733), the microscope objective (105, 205, 705) of the optical device being configured to direct the illumination light (102, 202, 502, 602, 702) onto the resonator (112, 212, 712) at an angle of incidence greater than a critical angle of an interface between the first layer (241, 541, 641) and the spacer layer (242, 542, 642), such that the illumination light (102, 202, 502, 602, 702) resonantly excites at least one mode in the waveguide layer (243, 543, 643) and illuminates the sample (133, 233, 733) with an enhanced evanescent wave.

14. The optical microscope (100, 200, 700) as claimed in one of claims 12 to 13, wherein the optical device comprises a polarizing beam splitter plate (114, 214, 714), the polarizing beam splitter plate (114, 214, 714) reflecting the illumination light (102, 202, 502, 602, 702) toward the microscope objective (105, 205, 705) and being traversed by the outgoing light.

15. The optical microscope (700) as claimed in claim 14, wherein the optical detector is a first optical detector (706), the optical microscope comprising a second optical detector (716), the optical device comprising a non-polarizing beam splitter plate (766), the non-polarizing beam splitter plate receiving the outgoing light (704, 715) and splitting the outgoing light into a first portion of outgoing light directed toward the first detector (706) and a second portion of outgoing light directed toward the second detector (716), the first portion of outgoing light comprising a first portion of reflected light (778) and a first portion of scattered light (780), a phase mask (768) being arranged to be traversed by the first portion of outgoing light, the phase mask (768) being configured to apply a phase shift between the first portion of reflected light and the first portion of scattered light.

16. The optical microscope (700) as claimed in claim 16, wherein the phase mask is a first phase mask (768), the optical device further comprising a second phase mask (771) arranged to be traversed by the second portion of outgoing light, the second portion of outgoing light comprising a second portion of reflected light (779) and a second portion of scattered light (781), the second phase mask (771) being configured to apply a phase shift between the second portion of reflected light and the second portion of scattered light, the first phase mask and the second phase mask having different phase properties.

17. The optical microscope (100, 200, 700) as claimed in one of the preceding claims, wherein the optical device comprises an optical condenser (107, 207, 761) receiving the illumination light exiting the light source, the optical condenser (107, 207, 761) being configured to focus the illumination light in a Fourier plane (113, 213, 713) of the microscope objective (105, 205, 705) onto a zone remote from the optical axis of the microscope objective in order to produce said angle of incidence.

18. The optical microscope (800) as claimed in one of claims 1 to 11, wherein the resonator (812) is arranged between the microscope objective (805) and the light source (801) along the optical axis of said microscope objective (805), so that the light source (802) is adapted to illuminate the sample (833) received by the support surface of the resonator (812) in transmission.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

[Fig. 15]

[Fig. 16]

[Fig. 17]

[Fig. 18]

[Fig. 19]

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018011591 A
- US 2011311962 A